(19) **Europäisches Patentamt / European Patent Office / Office européen des brevets**

(11) **EP 4 757 403 A1**

(12) **EUROPEAN PATENT APPLICATION**
published in accordance with Art. 153(4) EPC

(43) Date of publication:
**10.06.2026  Bulletin 2026/24**

(21) Application number: **23946956.2**

(22) Date of filing: **28.07.2023**

(51) International Patent Classification (IPC):
**H04W 28/02** (2009.01)

(52) Cooperative Patent Classification (CPC):
**H04W 28/02**

(86) International application number:
**PCT/CN2023/109983**

(87) International publication number:
**WO 2025/025000 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **TIAN, Wenqiang**
  **Dongguan, Guangdong 523860 (CN)**
- **XIAO, Han**
  **Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD AND COMMUNICATION DEVICE**

(57)  Provided are a wireless communication method and a communication device. The method comprises: a first device sends first information to a second device, wherein the first information is used for determining a first receiving mode matching a first sending mode, the first sending mode is used for non-orthogonally transmitting a first signal on a target transmission resource, and the first receiving mode is used for receiving the first signal on the target transmission resource. In the embodiments of the present application, in the process of using the first sending mode for non-orthogonally transmitting the first signal on the target transmission resource, the first device sends, to the second device, the first information for determining the first receiving mode matching the first transmission mode, so that the second device receives the first signal in the matched first receiving mode, thereby avoiding performance loss when the second device receives the first signal.

First device → Second device

S1010, first information

FIG. 10

EP 4 757 403 A1

Description

## TECHNICAL FIELD

The present application relates to the field of communications, and in particular, to a wireless communication method and a communication device.

## BACKGRUND

With the development of the technology, communication systems support multiple signal transmission modes. That is to say, a transmitting terminal may select a transmission mode from a plurality of signal transmission modes to transmit a signal. Correspondingly, a receiving terminal may utilize a reception mode it supported to receive the signal. However, when the receiving terminal receives the signal based on such a reception mode, the signal reception performance is poor.

## SUMMARY

The present application provides a wireless communication method and a communication device. The following is an introduction to various aspects of the present application.

In a first aspect, a wireless communication method is provided, which includes: transmitting, by a first device, first information to a second device, where the first information is used for determining a first reception mode matching a first transmission mode. The first transmission mode is used for non-orthogonal transmission of a first signal on a target transmission resource, and the first reception mode is used for receiving the first signal on the target transmission resource.

In a second aspect, a wireless communication method is provided, which includes: receiving, by a second device, first information transmitted by a first device, where the first information is used for determining a first reception mode matching a first transmission mode. The first transmission mode is used for non-orthogonal transmission of a first signal on a target transmission resource, and the first reception mode is used for receiving the first signal on the target transmission resource.

According to a third aspect, a communication device is provided, which is a first device and includes: a transmitting unit, configured to transmit first information to a second device, where the first information is used for determining a first reception mode matching a first transmission mode. The first transmission mode is used for non-orthogonal transmission of a first signal on a target transmission resource, and the first reception mode is used for receiving the first signal on the target transmission resource.

In a fourth aspect, a communication device is provided, which is a second device and includes: a receiving unit, configured to receive first information transmitted by a first device, where the first information is used for determining a first reception mode matching a first transmission mode. The first transmission mode is used for non-orthogonal transmission of a first signal on a target transmission resource, and the first reception mode is used for receiving the first signal on the target transmission resource.

In a fifth aspect, a communication device is provided, which includes a transceiver, a memory and a processor. The memory is configured to store a program, and the processor is configured to invoke the program in the memory and control the transceiver to receive or transmit a signal, to cause the communication device to perform part or all of the steps in the methods of the above aspects.

In a sixth aspect, an apparatus is provided, which includes: a processor configured to invoke a program from a memory to cause the apparatus to perform the methods described in the above aspects.

In a seventh aspect, a chip is provided, which includes: a processor configured to invoke a program from a memory to cause a device equipped with the chip to perform the methods described in the above aspects.

In an eighth aspect, a computer-readable storage medium is provided, which has a program stored thereon. The program causes a computer to perform the methods described in the above aspects.

In a ninth aspect, a computer program product is provided, which includes a program. The program causes a computer to perform the methods described in the above aspects.

In a tenth aspect, a computer program is provided, which causes a computer to perform the methods described in the above aspects.

In the embodiment of the present application, during the process where a first device performs non-orthogonal transmission of a first signal on a target transmission resource by using the first transmission mode, the first device transmits first information used for determining a first reception mode matching the first transmission mode to the second device, thereby facilitating the second device to employ the matching first reception mode for receiving the first signal, which contributes to avoiding performance loss when the second device receives the first signal.

## BRIEF DESCRIPTION OF THE DRAWINGS

FIG. 1 is a schematic diagram illustrating a signal transmission process in a wireless communication system to which the embodiments of the present application are applicable.

FIG. 2 is a schematic diagram illustrating channel estimation and signal restoration applicable to the embodiments of the present disclosure.

FIG. 3 is a schematic diagram of patterns of data symbols and pilot symbols under different configurations.

FIG. 4 is a schematic diagram illustrating activation function-dependent nonlinear mapping implemented at a neuron.

FIG. 5 is a schematic diagram of a neural network applicable to the embodiments of the present application.

FIG. 6 is a schematic diagram of a convolutional neural network.

FIG. 7 is a schematic diagram illustrating the working principle of a long short-term memory model.

FIG. 8 is a schematic diagram illustrating channel estimation performed based on a channel estimation module.

FIG. 9 is a schematic diagram of a wireless communication system to which the embodiments of the present application are applicable.

FIG. 10 is a schematic flowchart of a wireless communication method provided in an embodiment of the present application.

FIG. 11 is a schematic flowchart of a wireless communication method provided in another embodiment of the present application.

FIG. 12 is a schematic flowchart of a wireless communication method provided in another embodiment of the present application.

FIG. 13 is a schematic flowchart of a wireless communication method provided in another embodiment of the present application.

FIG. 14 is a schematic flowchart of a wireless communication method provided in another embodiment of the present application.

FIG. 15 is a schematic flowchart of a wireless communication method provided in another embodiment of the present application.

FIG. 16 is a schematic flowchart of a wireless communication method provided in another embodiment of the present application.

FIG. 17 is a schematic flowchart of a wireless communication method provided in another embodiment of the present application.

FIG. 18 is a schematic flowchart of a wireless communication method provided in another embodiment of the present application.

FIG. 19 is a schematic flowchart of a wireless communication method provided in another embodiment of the present application.

FIG. 20 is a schematic flowchart of a wireless communication method provided in another embodiment of the present application.

FIG. 21 is a schematic flowchart of a wireless communication method provided in another embodiment of the present application.

FIG. 22 is a schematic flowchart of a wireless communication method provided by another embodiment of the present application.

FIG. 23 is a schematic diagram of a communication device according to an embodiment of the present application.

FIG. 24 is a schematic diagram of a communication device according to an embodiment of the present application.

FIG. 25 is a block diagram of a communication apparatus according to an embodiment of the present application.

## DETAILED DESCRIPTION

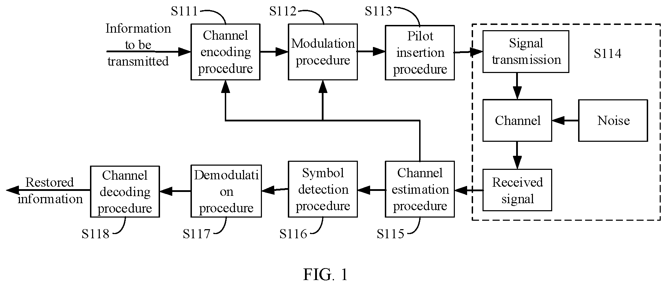

The technical solutions of the present application will be described below with reference to the accompanying drawings. To facilitate understanding of the present application, the terms and communication processes involved in the embodiments of the present application will be explained first with reference to FIGS.1 to 9.

1. Signal transmission process in wireless communication systems

FIG. 1 is a diagram illustrating signal transmission process in a wireless communication system to which the embodiments of the present application are applicable. As shown in FIG. 1, the signal transmission process in the wireless communication system can be broadly divided into multiple signal processing procedures S111 to S118 shown in FIG. 1. Some or all of the signal processing procedures shown in FIG. 1 may be implemented by individual AI models.

At the channel encoding procedure S111, a transmitting terminal performs channel encoding on information to be transmitted to obtain an encoded bitstream. The information to be transmitted may be in the form of a bitstream.

At the modulation procedureS112, the bitstream is modulated into modulation symbols.

At the pilot insertion procedure S113, pilot symbols are inserted into the modulation symbols to form a signal to be transmitted. The pilot symbols may be used by a receiving terminal for channel estimation and symbol detection.

At the signal transmission S114, the above signal is carried on a channel and transmitted to a receiving terminal. During the transmission process through the channel, the signal usually gets superimposed with noise.

At the channel estimation procedure S115, the receiving terminal may perform channel estimation based on reference signals to obtain channel state information-reference signal (CSI), and feedback the CSI to the transmitting terminal through a feedback link. The transmitting terminal may use the SCI to adjust the scheme for channel encoding, modulation, or precoding.

At the symbol detection procedure S116, symbol detection is performed on received modulated symbols to obtain a detection result.

At the demodulation procedure S117, the received modulation symbols are demodulated based on the detection result to obtain a bitstream.

At the channel decoding procedure S118, the bitstream is decoded to obtain restored information, and the restored information may be in the form of a bitstream.

It should be understood that the signal processing procedures S111 to S118 shown in FIG. 1 are only exemplary common signal processing procedures in the wireless communication system. The wireless communication system may also include signal processing procedures such as resource mapping, precoding, interference cancellation, and CSI measurement. These signal processing procedures may also be implemented through individual artificial intelligence (AI) models. For the sake of brevity, this application will not go into details.

2. Channel estimation

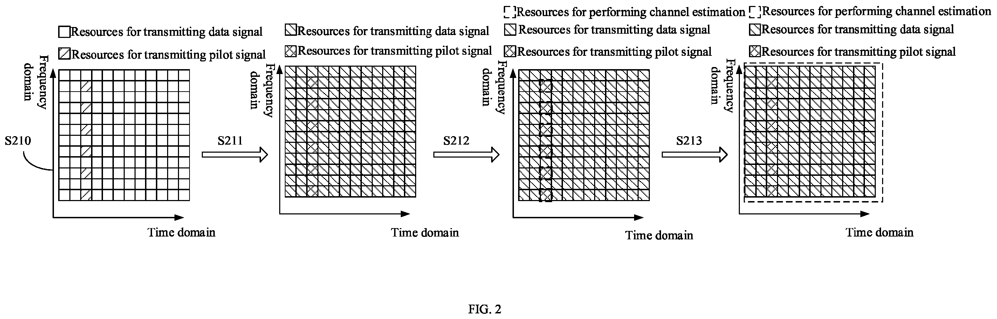

Due to the complexity and time-varying nature of the wireless channel environment, the receiving terminal in the wireless communication system (e.g., the wireless communication system introduced above) needs to restore the received signal based on the channel estimation result. FIG. 2 is a schematic diagram illustrating the channel estimation and signal restoration applicable to the embodiments of the present application.

As shown in FIG. 2, in step S210, the transmitting terminal transmits not only data signals but also a series of reference signals known to the receiving terminal-such as the channel state information-reference signal (CSI-RS) and the demodulation reference signal (DMRS)-on the time-frequency resources.

In step S211, the transmitting terminal transmits the above-mentioned data signals and reference signals to the transmitting terminal via a channel.

The time-frequency resources occupied by the reference signals are different from the time-frequency resources occupied by the data signals.

In step S212, the receiving terminal may perform channel estimation after receiving the reference signals. In one possible implementation, the receiving terminal may estimate channel information of the channel used for transmitting reference signals through a channel estimation algorithm (e.g., least squares method (LS) channel estimation), based on a pre-stored reference signal and a received reference signal.

In step S213, based on channel information of a channel used for transmitting pilot sequences, the receiving terminal may recover the channel information on full time-frequency resources by using an interpolation algorithm, which can be used for subsequent CSI feedback or data restoration.

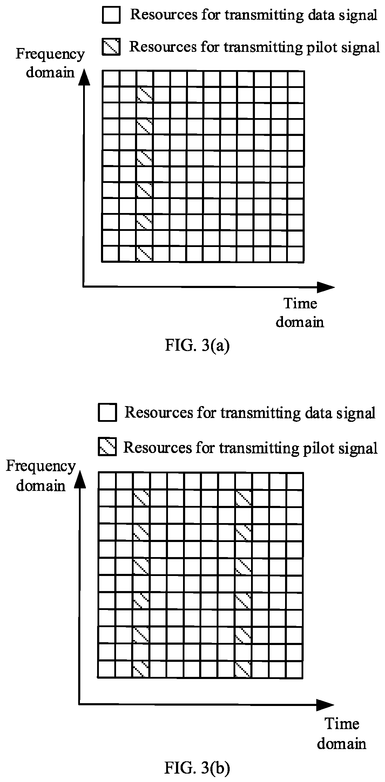

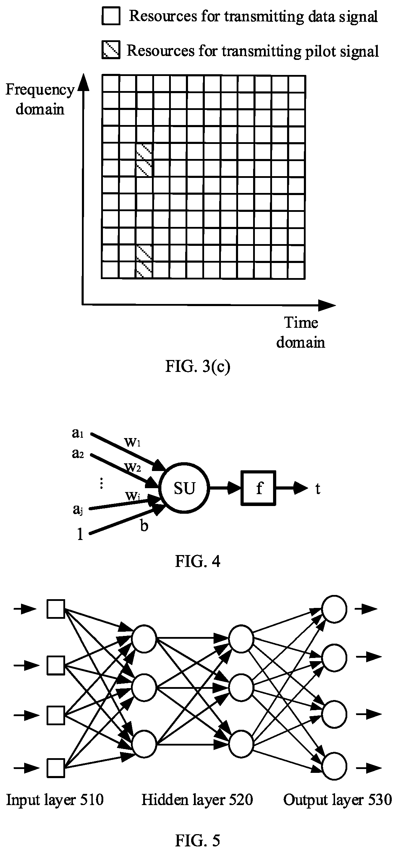

Based on the above description with reference to FIG. 2, it can be seen that the time-frequency resources used for transmitting reference signals are different from those used for transmitting data signals. In addition, some communication protocols (e.g., NR communication protocols) specify that symbols used for transmitting reference signals (hereinafter referred to as "pilot symbols") and symbols used for transmitting data signals (hereinafter referred to as "data symbols") are different. FIG. 3 shows patterns of data symbols and pilot symbols under different configurations.

As shown in FIG. 3(a), within a resource block (RB), the pilot symbols are distributed at every other symbol position among the plurality of REs corresponding to Symbol 2 in the RB. As shown in FIG. 3(b), within a RB, the pilot symbols occupy a portion of symbols among the plurality of symbols corresponding to Symbol 2 and Symbol 10 in the RB. As shown in FIG. 3(c), within a RB, the pilot symbols occupy multiple groups of REs in Symbol 2 of the RB, and each group of REs includes two consecutive resource elements (REs) in the frequency domain.

Generally, different patterns shown in FIGS. 3(a) to 3(c) can be adapted to different communication environments. In some implementations, when the terminal device moves at a high speed and channel characteristics change rapidly, a pattern with denser pilot symbol distribution may be selected to facilitate the improve of the accuracy of channel quality estimation over the entire RB. For example, the pattern shown in FIG. 3(b) may be selected.

In other implementations, when the terminal device moves at low speed and channel characteristics change slowly with time, a pattern with sparser pilot symbol distribution can be selected to facilitate the reduction of the overhead caused by reference signal transmission while maintaining sufficient accuracy for channel quality estimation over the entire RB.

3. Neural network

In recent years, artificial intelligence research, represented by neural networks, has achieved significant breakthroughs in numerous fields, and it will continue to play an important role in human productivity and daily life for a considerable time to come. A neural network can be interpreted as a computational model consisting of multiple interconnected neuron nodes, where the connections between nodes can represent the weighted values from input signals to output signals-commonly referred to as parameters. Each node performs a weighted summation of different input signals and produces an output through a specific activation function.

As shown in FIG. 4, a neuron can implement nonlinear mapping through the activation function. Here, the input to the neuron may be denoted as A, with each dimension of the input denoted as $a_j$ and its corresponding parameter denoted as $w_j$. This parameter, along with the summation unit (SU), enhance or attenuate the input. Furthermore, the output of the SU may be input into the activation function f to produce the output t, where j ranges from 1, 2, ... , n.

Common neural networks include convolutional neural network (CNN), recurrent neural network (RNN) and deep neural network (DNN).

The neural network applicable to the embodiments of the present application will be described below with reference to FIG. 5. The neural network shown in FIG. 5 may include three different types of layers, categorized according to their positions: an input layer 510, hidden layers 520, and an output layer 530. Generally speaking, the first layer is the input layer 510, the last layer is the output layer 530, and all the intermediate layers between the first layer and the last layer are hidden layers 520.

The input layer 510 is used for inputting data. For example, the input data may be a received signal received by a receiving terminal. The hidden layers 520 are used for processing the input data, for example, performing decompression processing on the received signal. The output layer 530 is used for outputting the processed output data, such as the decompressed signal.

As shown in FIG. 5, the neural network includes multiple layers, each layer includes multiple neurons, and the neurons between layers may be fully connected or partially connected. For connected neurons, the output of a neuron in the previous layer serves as the input to the neuron in the next layer.

With the continuous development of the neural network research, neural network deep learning algorithms have been proposed in recent years, which introduces more hidden layers into the neural network to form a DNN. A greater number of hidden layers enables the DNN to better model complex scenarios in the real world. Theoretically, a model with more parameters has higher complexity and greater "capacity", which means that such a model can accomplish more complex learning tasks. Such a neural network model is widely used in pattern recognition, signal processing, optimization combination, anomaly detection, and other aspects.

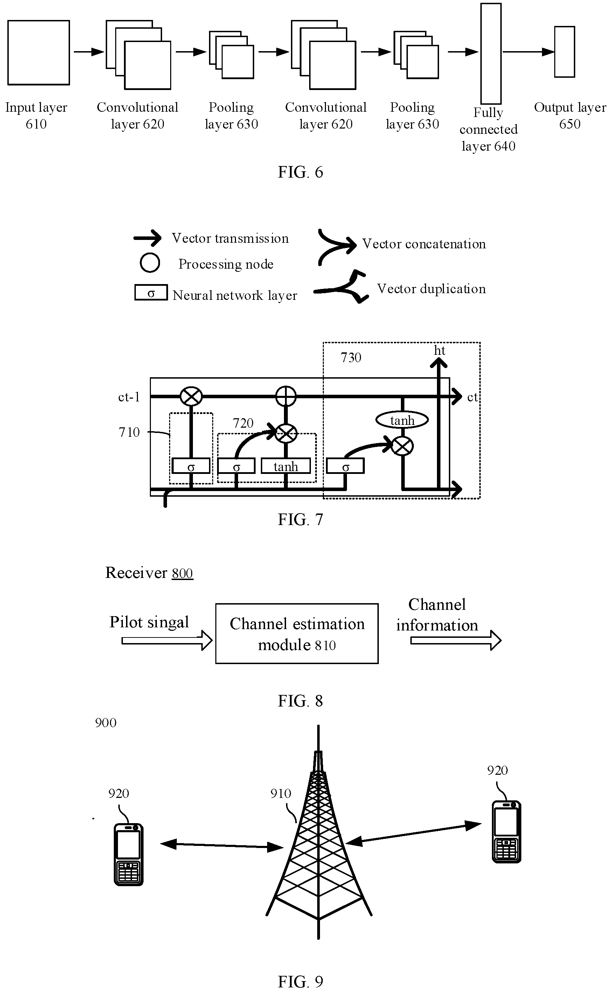

The CNN is a type of deep neural network featuring a convolutional structure, and its structure is shown in FIG. 6, which may include an input layer 610, convolutional layers 620, pooling layers 630, a fully connected layer 640, and an output layer 650.

Each convolution layer 620 may include numerous convolution operators, also referred to as kernels. These operators function as filters extracting specific information from the input signal. Essentially, a convolution operator is a parameter matrix, which is often predefined.

The parameter values in these parameter matrices need to be obtained through extensive training in practical applications. The parameter matrices formed by the parameter values obtained through training can extract information from the input signal, thereby helping the CNN to make correct predictions.

In a case where a CNN has multiple convolutional layers, the initial convolutional layer often needs to extract numerous general features, which may also be referred to as low-level features. As the depth of the CNN increases, the features extracted by the subsequent convolutional layers become more and more complex.

The pooling layer 630 is often periodically introduced after convolutional layers to reduce the number of training parameters. For example, as shown in FIG. 6, one convolution layer may be followed by one pooling layer, or multiple convolution layers may be followed by one or more pooling layers. During signal processing, the sole purpose of the pooling layer is to reduce the spatial size of the extracted information.

After the processing procedure of the convolutional layers 620 and the pooling layers 630, the CNN is still not ready to output the required output information. As mentioned above, the convolution layers 620 and the pooling layers 630 serve only to extract features and reduce the number of parameters introduced by the input data. However, in order to generate the final output information (e.g., the bitstream of the original information transmitted by the transmitting terminal), the CNN also needs to employ the fully connected layer 640. Typically, the fully connected layer 640 may include multiple hidden layers, and the parameters contained in the multiple hidden layers may be pre-trained based on relevant training data for a specific task type. For example, the task type may include decoding data signals received by the receiving terminal. As another example, the task type may include channel estimation based on reference signals received by the receiving terminal.

After the multiple hidden layers in the fully connected layer 640, the final layer of the entire CNN is the output layer 650, which is responsible for outputting the results. Typically, the output layer 650 is provided with a loss function (e.g., a loss function like categorical cross-entropy) to calculate the prediction error, or to evaluate the difference between the result output by the CNN model (also known as the predicted value) and the ideal result (also known as the true value).

In order to minimize the loss function, the CNN model needs to be trained. In some implementations, a back propagation (BP) algorithm may be used for training the CNN model. The BP training process consists of a forward propagation phase and a back propagation phase. During the forward propagation phase (which is the propagation from layer 610 to layer 650 in FIG. 6), the input data is fed through the above-mentioned various layers of the CNN model, and processed layer by layer until the data reaches the output layer. If the result outputted at the output layer differs significantly from the ideal result, the process transitions to back propagation (which is the propagation from layer 650 to layer 610 in FIG. 6) with the goal of minimizing the loss function. The partial derivatives of the optimization goal with respect to the weights of each neuron are calculated layer by layer to form the gradient vector of the optimization goal with respect to the weight vector, which serves as the basis for modify the model parameters. The training process of the CNN is accomplished during the parameter modification process. When the above error reaches the expected value, the CNN training process comes to an end.

It should be noted that the CNN shown in FIG. 6 serves only as an example of a convolutional neural network. In practical applications, the convolutional neural networks may also exist in the form of other network models, and the embodiments of the present application do not impose limitations on this aspect .

The purpose of RNNs is to process sequential data. In conventional neural network models (such as CNN models), the architecture flows from the input layer to the hidden layers and then to the output layer, and layers are fully connected but there are no connections between nodes of the same layer. However, this type of common neural network is inadequate for many problems. For example, predicting the next word in a sentence typically requires information from preceding words, because the words in a sentence are not independent of each other. RNNs are termed "recurrent" because the current output of a sequence is also dependent on previous outputs. This manifests concretely as the network's ability to memorize previous information and apply it to the computation of the current output, in other words, the nodes between the hidden layers are no longer unconnected but interconnected. Furthermore, the input to the hidden layer includes not only the output from the input layer but also the hidden layer's own output at the previous moment. Theoretically, RNNs can process sequential data of any length.

The training of RNN shares similarities with the training of conventional ANN (artificial neural network), as both utilize the BP error back propagation algorithm. However, a slight distinction exists. If the RNNs are unrolled, the parameters W, U, and V are shared, which is not the case in the conventional neural networks. Furthermore, when the gradient descent algorithm is employed, the output at each step depends not only on the network state at the current step, but also on the network states at several previous steps. For example, when t equals to 4, it is necessary to back propagate the error through three preceding steps, and various gradients need to be applied to the three preceding steps. This learning algorithm is known as back propagation through time (BPTT).

Given the existence of Artificial Neural Networks (ANNs) and Convolutional Neural Networks (CNNs), why is there still a need for Recurrent Neural Networks (RNNs)? The reason is straightforward: both the convolutional neural networks and the artificial neural networks operate under the assumption that elements are independent of each other, and that the inputs and outputs are also independent, such as cats and dogs. However, in the real world, many elements are interconnected. For example, stock prices fluctuating over time, or a person saying: "I love traveling, and my favorite place is Yunnan. I must visit _ whenever I get the chance in the future." To fill in the blank here, human beings would intuitively choose "Yunnan", as it can be inferred from the preceding context. However, it is quite difficult for a machine to achieve this. Therefore, the current recurrent neural network emerged, and its essence lies in possessing a memory capability akin to that of humans. Consequently, its output depends on both the current input and the memory. To explain the RNN in one sentence, it can be described as a repeatedly used unit structure.

At present, to address the gradient explosion or vanishing issues in RNN, modifications have been made to the RNN, resulting in the long short-term memory (LSTM) model. As shown in FIG. 7, LSTM introduces a new memory unit $c_t$ (also referred to as "cell state"), which is used for linear recurrent information transfer and also used for outputting information to the external state $h_t$ of the hidden layer. At each time moment t, $c_t$ records the historical information up to the current time. Unlike RNN, which only considers the most recent states, the memory unit decides which states should be retained and which states should be forgotten, thereby overcoming the defects of the conventional RNN in long-term memory.

Referring again to FIG. 7, to achieve the state selection mentioned in the above, a gate control mechanism is introduced into the memory unit to control the information flow path. This mechanism operates like a gate in digital circuits: a value of "0" indicates a closed state, while "1" indicates an open state. The memory unit includes a forget gate 710, an input gate 720, and an output gate 730. The forget gate is used to control how much information from the previous moment memory unit $c_{t-1}$ should be discarded. The input gate is used to control how much information the current moment candidate state $\widehat{c}_t$ needs to store. The output gate is used to control how much information from the current moment memory unit $c_t$ should be output to the external state ht.

### 4. AI decoder-based channel estimation

The AI decoder-based channel estimation aims to leverage an AI-based channel estimation module to process the reference signals received by the receiving terminal, thereby achieving channel estimation. FIG. 8 shows the process of channel estimation performed based on a channel estimation module. As shown in FIG. 8, the reference signal received by the receiver 800 is used as the input to the channel estimation module 810. Correspondingly, the channel estimation module 810 processes the input reference signal to output channel information. Furthermore, in some implementations, in addition to the reference signal, other auxiliary information may also be input to improve the accuracy of the channel information output by the channel estimation module. For example, inputs to the channel estimation module 810 may also include the original sequence of the reference signal pre-stored by the receiver 800, the energy level of the reference signal received by the receiver 800, the transmission delay when transmitting the reference signal, or the noise when transmitting the reference signal.

The terms and communication processes involved in the embodiments of the present application are described above with reference to FIG. 1 to 8. The communication system to which the embodiments of the present application are applicable will be described below with reference to FIG. 9.

FIG. 9 is a wireless communication system 900 to which the embodiments of the present application are applicable. The wireless communication system 900 may include a network device 910. The network device 910 may be a device that communicates with a terminal device 920. The network device 910 can provide communication coverage for a specific geographical area and can communicate with terminal devices 920 located within that coverage area.

FIG. 9 exemplarily shows one network device 910 and two terminal devices 920. Optionally, the wireless communication system 900 may include multiple network devices, and the coverage area of each network device may contains a different number of terminal devices, which is not limited in the embodiments of the present application.

Optionally, the wireless communication system 900 may further include other network entities, such as a network controller, and a mobility management entity, which is not limited in the embodiments of the present application.

Optionally, direct communication may also be established between terminal devices 920. For example, two terminal devices 920 may communicate with each other via a device-to-device (D2D) link.

It should be noted that, in the following description, the first device and the second device are used as examples for illustration. In some implementations, the first device may be the aforementioned network device 910, and correspondingly, the second device may be the aforementioned terminal device 920. In other implementations, the first device may be the aforementioned terminal device 920, and correspondingly, the second device may be the aforementioned network device 910. In yet other implementations, the first device may be the aforementioned terminal device 920, and correspondingly, the second device may be the aforementioned terminal device 920. The embodiments of the present application do not impose specific limitations on this aspect.

It should be understood that the technical solutions of the embodiments of the present application can be applied to various communication systems, such as: fifth generation (5G) system or new radio (NR), long term evolution (LTE) system, LTE frequency division duplex (FDD) system, and LTE time division duplex (TDD). The technical solution provided in the present application may also be applied to the future communication system, such as the sixth-generation mobile communication system, or satellite communication system.

The terminal device in the embodiments of the present application may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The terminal device in the embodiments of the present application may refer to a device that provides voice and/or data connectivity to users and may be used to connect people, objects and machines, such as a handheld device or a vehicle-mounted device with a wireless connection function. The terminal device in the embodiments of the present application may be a mobile phone, a pad, a laptop computer, a personal digital assistant, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. Optionally, a UE may be used to function as a base station. For example, a UE can act as a scheduling entity that provides sidelink signals between terminal devices in V2X or D2D or the like. As another example, a cellular phone and an automobile can utilize sidelink signals to communicate with each other. Similarly, a cellular phone and a smart home device can communicate with each other without relaying communication signals through a base station.

The network device in the embodiments of the present application may be a device used to communicate with the terminal device, and the network device may also be referred to as an access network device or a wireless access network device, for example, the network device may be a base station. The network device in the embodiments of the present application may refer to a radio access network (RAN) node (or device) that connects the terminal device to the wireless network. The term "base station" may broadly cover or be interchanged with the following various names, such as: a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), or a positioning node. The base station may be a macro base station, a micro base station, a relay node, a donor node or analogues, or a combination thereof. The base station may also refer to a communication module, modem, or chip installed within the aforementioned equipment or devices. The base station may also be a mobile switching center, a device functioning as a base station in device-to-device (D2D), vehicle-to-everything (V2X), or machine-to-machine (M2M) communications, a network-side device in the 6G network, or a device functioning as a base station in future communication systems. The base station can support networks with the same or different access technologies. The embodiments of the present application do not impose limitations on the specific technology or the particular equipment form adopted by the network device.

Base stations can be fixed or mobile. For example, a helicopter or drone can be configured to act as a mobile base station, and one or more cells may move based on the location of the mobile base station. In other examples, a helicopter or drone may be configured to function as a device communicating with another base station.

In some deployments, the network device in the embodiments of the present application may refer to a CU or a DU, or the network device includes a CU and a DU. The gNB may also include an AAU.

The network devices and terminal devices can be deployed on land, including indoors or outdoors, handheld or vehicle-mounted; they can also be deployed on water surfaces; or they can also be deployed on aerial vehicles such as aircraft, balloons and satellites. The embodiments of the present application do not limit the deployment scenarios of the network devices and terminal devices.

It should be understood that the communication device involved in this application may be a network device or a terminal device. For example, the first communication device is a network device, and the second communication device is a terminal device. As another example, the first communication device is a terminal device, and the second communication device is a network device. As still another example, the first communication device and the second communication device are both network devices, or both terminal devices.

It should also be understood that all or part of the functions of the communication device in the present application may also be implemented by software functions running on hardware, or by virtualized functions instantiated on a platform (e.g., a cloud platform).

With the development of the technology, the communication systems support multiple signal transmission modes. That is to say, a transmitting terminal may select a transmission mode from a plurality of signal transmission modes to transmit a signal. Correspondingly, a receiving terminal may utilize a reception mode it supported to receive the signal. However, when the receiving terminal receives the signal based on such a reception mode, the signal reception performance is poor. The applicant identified the cause of the aforementioned issue: a mismatch between the reception mode employed by the receiving terminal and the transmission mode employed by the transmitting terminal, resulting from the receiving terminal's inability to ascertain the specific transmission mode adopted by the transmitting terminal when transmitting signals.

In the following description, signal transmission modes include, as examples, orthogonal transmission mode and non-orthogonal transmission mode. To facilitate understanding, the non-orthogonal transmission mode of signals will be introduced first, followed by an explanation of the mismatch problem between the transmission mode and the reception mode, based on the non-orthogonal and orthogonal modes of signals.

Currently, in known communication systems, to improve the reliability of transmitted signals, signals transmitted on multiple transmission resources are often transmitted in an orthogonal manner. The orthogonal transmission can be understood as processing the signals transmitted on multiple transmission resources into mutually orthogonal signals for transmission. These orthogonal signals are transmitted independently and do not interfere with each other. In the orthogonal transmission scenario, a certain transmission resource can only be used for transmitting one type of signal at a certain moment, resulting in low utilization efficiency of the transmission resources. In another aspect, in a case where the amount of total transmission resources is fixed, if the number of transmission resources occupied by one type of signal (hereinafter referred to as the "first signal") increases, it means that the number of transmission resources available for transmitting other signals is reduced, which may prevent those other signals from being transmitted timely.

In an example where the reference signal (also referred to as "pilot signals") is the first signal and the data signal is the second signal, the pilot signal and the data signal are orthogonally transmitted on different transmission resources. That is to say, a specific transmission resource can only be used for transmitting either a data signal or a pilot signal at a certain moment, resulting in relatively low utilization efficiency of transmission resources. In another aspect, when the amount of total transmission resources is fixed, if the number of transmission resources occupied by pilot signals increases, it means that the number of transmission resources available for transmitting data signals decreases, which may prevent the data signals from being transmitted timely. Alternatively, if the number of transmission resources occupied by data signals increases, it means that the number of transmission resources available for transmitting pilot signals decreases, which may result in a decrease in the accuracy of channel estimation performed based on the pilot signal.

Therefore, to address the above problems, the non-orthogonal transmission mode is introduced into communication systems. Based on this transmission mode, multiple signals can be transmitted on the same transmission resource(s) in the non-orthogonal transmission mode. Here, the transmission resources may include, for example, one or more of the following types of resources: time domain resources, frequency domain resources, and code domain resources. In an example where the first signal is the pilot signal, the pilot signal and the data signal can be non-orthogonally transmitted on the same transmission resource in the non-orthogonal transmission mode, which helps to improve the utilization efficiency of transmission resources. In addition, the number of transmission resources for transmitting pilot signals or data signals does not decrease, which helps to guarantee the timely transmission of data signals while ensuring the accuracy of channel estimation performed based on pilot signals.

However, signals transmitted non-orthogonally place high demands on the receiving terminal, requiring the reception scheme employed by the receiving terminal to be capable of demodulating the multiple signals transmitted in the non-orthogonal transmission mode. Therefore, for signals transmitted based on the non-orthogonal transmission mode, the receiving terminal needs to adopt a reception mode matching the non-orthogonal transmission mode, such as utilizing an AI receiving terminal to receive the non-orthogonally transmitted signals. However, as mentioned earlier, the receiving terminal often cannot ascertain the transmission mode employed by the transmitting terminal. In such cases, if the transmitting terminal employs a non-orthogonal transmission mode for signal transmission while the receiving terminal relies on a conventional receiving terminal (e.g., a non-AI receiving terminal), the received signal cannot be effectively distinguished, thereby leading to degraded signal reception performance.

Therefore, to address the above-mentioned problems, the embodiments of the present application provide a wireless communication method. The method introduces first information used for determining the reception mode (also referred to as a first reception mode) matching the transmission mode (also referred to as a first transmission mode). In this way, the transmission of the first information between the first device and the second device facilitates the use of matched transmission and reception modes and transmission modes by the transmitting terminal and receiving terminal during the transmission of the first signal between the first device and the second device. Compared to the conventional signal transmission processes in which the receiving terminal cannot select a reception mode matching the signal transmission mode, this approach helps to improve the signal reception performance.

It should be noted that the aforementioned first device may be a transmitting terminal of the first signal, and the second device may be a receiving terminal of the first signal. Alternatively, the first device may be a receiving terminal of the first signal, and the second device may be a transmitting terminal of the first signal. Herein, the transmitting terminal may be a network device or a terminal device, and the receiving terminal may be a network device or a terminal device, which is not limited in the embodiments of the present application.

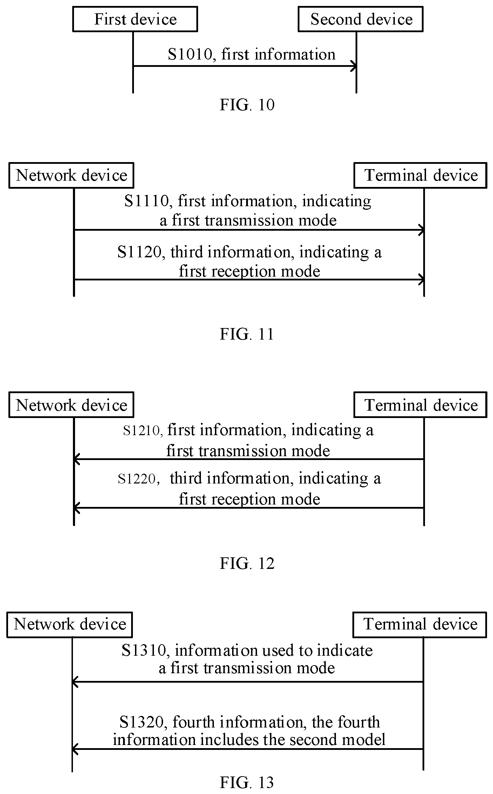

To facilitate understanding, a wireless communication method according to an embodiment of the present application will be described below with reference to FIG. 10. The method shown in FIG. 10 includes step S1010.

In step S1010, a first device transmits first information to a second device, where the first information is used for determining a first reception mode matching a first transmission mode.

In some implementations, the first transmission mode is used for non-orthogonal transmission of the first signal on a target transmission resource. Therefore, the first transmission mode may also be referred to as a "first processing mode", a "first transmission scheme", or a "transmission scheme for transmitting the first signal". Accordingly, the first device may transmit the first signal on the target transmission resource by using the first transmission mode (or the first sending mode). For example, according to the first transmission mode, the first signal may be processed based on the first model (e.g., linear superposition and/or nonlinear superposition) to allow the first signal to be transmitted non-orthogonally alongside other signals on the target transmission resource. Here, the first model may be, for example, an AI model or a machine learning (ML) model.

In an example where the first signal is a pilot signal, the first transmission mode may indicate the transmission resources occupied by the first signal, or in other words, the first transmission mode may indicate the transmission resources occupied by the transmission of the first signal in a non-orthogonal manner. For example, the first transmission mode may be used to indicate a pilot pattern.

In some implementations, the first reception mode is used for receiving the first signal on the target transmission resource. That is to say, the second device employs the first reception mode to receive the first signal on the target transmission resource. It should be understood that, in the embodiments of the present application, the reception of the first signal may include the processing procedures applied to the first signal. For example, the reception of the first signal may include a process of decoding the first signal. As another example, if the first signal is a pilot signal, the reception of the first signal may include a process of performing channel estimation based on the pilot signal. Therefore, in the embodiments of the present application, the term "first reception mode" may be replaced by a "first processing manner", a "first processing scheme", or a "processing scheme for processing the first signal". Of course, in the embodiments of the present application, the reception of the first signal may also refer solely to the process of receiving the first signal, excluding any subsequent processing procedures.

In some implementations, the first reception mode may employ the second model for the reception of the first signal. In an example where the first signal is a pilot signal, the first reception mode may include a channel estimation scheme based on the second model. The second model may be an AI model or an ML model. For example, the second model may include one or more of the following models: a fully connected neural network (FCN), a CNN, a RNN, or a transformer model.

As mentioned above, the first signal may be the pilot signal. Accordingly, signals non-orthogonally transmitted on the target transmission resource may include the pilot signal along with other signals. The embodiments of the present application do not impose specific limitation on these other signals, which may be, for example, data signals. In an example where the non-orthogonally transmitted signals include the pilot signal and the data signals, the first reception mode may include a data parsing mode based on the second model, or in other words, parsing a data signal from the received signal based on the second model. Certainly, in the embodiments of the present application, the above-mentioned first reception mode may also include a data parsing scheme based on the second model and a channel estimation scheme based on the second model. Alternatively, the first reception mode may include only the channel estimation scheme based on the second model.

It should be noted that if the first reception mode includes both the data parsing scheme based on the second model and the channel estimation scheme based on the second model, then the second model used for the data parsing scheme and the second model used for the channel estimation scheme may be different. In this case, it can be understood that the aforementioned second model may include multiple distinct models, where one (or some) of the multiple models are used for the data parsing, and the remaining models are used for the channel estimation scheme. Of course, in the embodiments of the present application, the second model used for the data parsing scheme and the second model used for the channel estimation scheme may be the same model.

In some implementations, "the first reception mode matches the first transmission mode" can be alternatively expressed as "the first reception mode for the first signal corresponds to the first transmission mode. As introduced above, in the embodiments of the present application, the first reception mode can be replaced by "first processing scheme", and the first transmission mode can be replaced by "first transmission scheme". Accordingly, "the first information is used for determining the first reception mode matching the first transmission mode" can be alternatively expressed as "the first information is used for determining the first processing scheme matching the first transmission scheme".

In an example where the first transmission mode includes the non-orthogonal transmission mode, the first reception mode matching the first transmission mode may be a reception mode of receiving the first signal based on a receiving terminal with the second model. In an example where the first transmission mode is used for the non-orthogonal transmission of pilot signals and data signals, the first reception mode is used for one or more of: a pilot signal decoding scheme based on the second model, a channel estimation scheme based on the second model, or a data parsing scheme based on the second model. The data parsing scheme based on the second model is used for receiving the data signal that is transmitted in a non-orthogonal manner alongside the first signal.

In some implementations, the first transmission mode is associated with one or more of: a sequence of the first signal, transmit power of the first signal, a transmission scenario of the first signal, a transmission condition of the first signal, a transmission resource for transmitting the first signal, or a training result of a first model. The first model is used for processing the first signal to be transmitted.

It should be noted that the first transmission mode is associated with the above-mentioned information, which can be understood as that the indication information indicating the first transmission mode is associated with the above-mentioned information. This will be introduced with reference to Table 1, and for the sake of brevity, no further details will be provided here.

If the first transmission mode is associated with the transmission resource used for transmitting the first signal, and the transmission resource used for transmitting the first signal may be determined based on the pattern of the first signal, that is, the first transmission mode is associated with the pattern of the first signal. The pattern of the first signal is used to indicate the transmission resource of the first signal. In an example where the first signal is a pilot signal, the pattern of the first signal may be the pilot pattern.

In an example where transmission resources are time domain resources, in some implementations, the pattern of the first signal is used to indicate that the first signal occupies time domain resources in a first time domain length. For example, the time domain resources in the first time domain length may include one time domain resource or a plurality of time domain resources, where a time domain resource may be, for example, a time domain symbol, a slot, etc. For example, the pattern of the first signal indicates that the first signal occupies the a1-th symbol in a slot. For example, the pattern of the first signal indicates that the first signal occupies the a1-th symbol and the a2-th symbol in a slot. For example, the pattern of the first signal indicates that the first signal occupies the a1-th symbol, the a2-th symbol, and the a3-th symbol in a slot. For example, the pattern of the first signal indicates that the first signal occupies the a1-th symbol, the a2-th symbol, the a3-th symbol, and the a4-th symbol in a slot. For example, the pattern of the first signal indicates that the first signal occupies the a1-th to a7-th symbols in a slot. For example, the pattern of the first signal indicates that the first signal occupies the a1-th to a8-th symbols in a slot.

It should be noted that the values of the aforementioned a1 to a8 can be selected from 1 to K, where K is a positive integer. For example, the value of K may include 12, 24, 48, or 60. Correspondingly, if K=14, then a1=3, a2=6, a3=10, a4=13. As another example, if K=28, then a1=2, a2=4, a3=6, a4=8, a5=10, a6=12, a7=17.

In addition, the aforementioned a1 to a8 can be determined based on the index of the time domain resource. For example, a1 to a8 may be the indexes of time domain resources. As another example, a1 to a8 may be calculated through the indexes of time domain resources. The indexes of time domain resources may be indexed sequentially from earliest to latest in the time domain (i.e., a chronological order), or the index of the time domain resources may be indexed sequentially from latest to earliest in the time domain (i.e., in a reverse order).

In an example where transmission resources are frequency domain resources, in some implementations, the pattern of the first signal is used to indicate that the first signal occupies frequency domain resources of the first frequency domain range. The frequency domain resources of the first frequency domain range may include, for example, one frequency domain resource or a plurality of frequency domain resources. The frequency domain resources may be, for example, subcarriers. For example, the pattern of the first signal indicates that the first signal occupies the b1-th subcarrier within an RB. For example, the pattern of the first signal indicates that the first signal occupies the b1-th subcarrier and the b2-th subcarrier within an RB. For example, the pattern of the first signal indicates that the first signal occupies the b1-th subcarrier, the b2-th subcarrier, and the b3-th subcarrier within a slot. For example, the pattern of the first signal indicates that the first signal occupies the b1-th subcarrier, the b2-th subcarrier, the b3-th subcarrier, and the b4-th subcarrier within an RB. For example, the pattern of the first signal indicates that the first signal occupies the b1-th to b7-th subcarriers within a slot. For example, the pattern of the first signal indicates that the first signal occupies the b1-th to b8-th subcarriers within a slot.

It should be noted that the values of the aforementioned b1 to b8 can be selected from 1 to M, where M is a positive integer. For example, the value of M may include 12, 24, 48, or 60. Correspondingly, for example, if M=11, then b1=3, b2=6, b3=10, b4=13. If M=24, then b1=2, b2=4, b3=6, b4=8, b5=10, b6=12.

If the first transmission mode is associated with the transmission scenario of the first signal, the transmission scenario of the first signal is associated with one or more of: a cell in which the first signal is transmitted, an environment in which the first signal is transmitted, or a mobility status of the first device and/or the second device.

In an example where the transmission scenario of the first signal is associated with the cell in which the first signal is transmitted, alternatively, the transmission scenario of the first signal is associated with the cell type of the cell in which the first signal is transmitted. The cell type may include one or more of: a macro cell, a common cell, or a small cell. Generally, in order to improve the transmission performance of the first signal, the transmission mode of the first signal may vary slightly in different cells.

In an example where the transmission scenario of the first signal is associated with the environment in which the first signal is transmitted, alternatively, the transmission scenario of the first signal is associated with the environment in which the first signal is transmitted. The environment in which the first signal is transmitted may include, for example, an indoor environment or an outdoor environment. Generally, in order to improve the transmission performance of the first signal, the transmission mode adopted for transmitting the first signal may be slightly different in different environments.

In an example where the transmission scenario of the first signal is associated with the motion state of the first device and/or the second device as an example, in some implementations, the motion state may include a mobile state or a stationary state. In some other implementations, the motion state may include a movement speed, and the movement speed may be classified into one or more levels: low speed, medium speed, high speed or ultra-high speed. Generally, in order to improve the transmission performance of the first signal, the transmission mode adopted for transmitting the first signal may be slightly different in the motion states.

If the first transmission mode is associated with the transmission condition of the first signal, the transmission condition of the first signal is associated with one or more of the following: a transmission configuration of the first signal, an antenna configuration of the first signal, or associated with channel characteristics of a channel used for transmitting the first signal.

In some implementations, the transmission configuration of the first signal is used to indicate frequency domain resources for transmitting the first signal. For example, the transmission configuration of the first signal may be used to indicate the quantity of the frequency domain resources for transmitting the first signal, and the frequency domain resources may include bandwidth and sub-band. In some other implementations, the transmission configuration of the first signal is used to indicate the time domain resources for transmitting the first signal. For example, the transmission configuration of the first signal may be used to indicate the quantity of time domain resources for transmitting the first signal, and the time domain resources may include slots, sub frames, etc.

In some implementations, the antenna configuration may include a transmit antenna port configuration and/or a receive antenna port configuration.

In some implementations, the channel characteristics of the channel used for transmitting the first signal are used to indicate the performance of transmitting the first signal over the channel. The channel characteristics may include, for example, one or more of: line of sight (LOS) channel characteristics, non line of sight (NLOS) channel characteristics, multipath characteristics, or frequency selective characteristics.

If the first transmission mode is associated with the transmit power of the first signal, in some implementations, the transmit power of the first signal may be determined based on a fixed transmit power (e.g., the absolute transmit power). For example, within the resource set where the target transmission resource is located, the transmit power of the first signal used for non-orthogonal transmission may all be fixed transmit power. As another example, on some transmission resources within the resource set where the target transmission resource is located, the transmit power of the first signal used for non-orthogonal transmission may be determined based on transmit power 1, while on the other transmission resources within the resource set, the transmit power of the first signal used for non-orthogonal transmission may be determined based on transmit power 2. That is to say, the transmit power of the first signal used for non-orthogonal transmission within the resource set is variable. In an example where the first signal is a pilot signal, all pilot signals in the resource set are transmitted using transmit power P1.

Under the assumption that the first signal is a pilot signal, the pilot signal is transmitted with transmit power P2 on the p1-th symbol to the p2-th symbol within the resource set, the pilot signal is transmitted with transmit power P3 on the p3-th symbol to the p4-th symbol in the resource set, or the pilot signal is transmitted with transmit power P4 on the p5-th symbol to the p6-th symbol in the resource set. The transmit power P2, transmit power ratio P3, and transmit power ratio P4 are all different.

Under the assumption that the first signal is a pilot signal, the pilot signal is transmitted with transmit power P5 on the p1-th symbol to the p2-th symbol in the resource set, the pilot signal is transmitted with transmit power P6 on the p3-th symbol to the p4-th symbol in the resource set, or the pilot signal is transmitted with transmit power P7 on the p5-th symbol to the p6-th symbol in the resource set. The transmit power P5, transmit power ratio P6, and transmit power ratio P7 are all different.

In some other implementations, the transmit power of the first signal may be determined based on a fixed transmit power ratio, and the transmit power ratio is used to indicate the ratio between the transmit power of the first signal on the target transmission resource and the total transmit power of a plurality of signals transmitted in the non-orthogonal mode. For example, within the resource set where the target transmission resource is located, the transmit power of the first signals used for the non-orthogonal transmission may all be determined based on the transmit power ratio. As another example, on some transmission resources within the resource set where the target transmission resource is located, the transmit power of the first signal used for the non-orthogonal transmission may be determined based on transmit power ratio 1, while on the other transmission resources within the resource set, the transmit power of the first signal used for the non-orthogonal transmission may be determined based on transmit power ratio 2. That is to say, the transmit power ratio of the first signal used for non-orthogonal transmission within the resource set is variable.

Under the assumption that the first signal is a pilot signal, the pilot signal is transmitted using transmit power ratio P2 on the p1-th symbol to the p2-th symbol in the resource set, the pilot signal is transmitted using transmit power ratio P3 on the p3-th symbol to the p4-th symbol in the resource set, or the pilot signal is transmitted using transmit power ratio P4 on the p5-th symbol to the p6-th symbol in the resource set. The transmit power ratio P2, the transmit power ratio P3, and the transmit power ratio P4 are all different.

Under the assumption that the first signal is a pilot signal, the pilot signal is transmitted using transmit power ratio P5 on the p1-th symbol to the p2-th symbol in the resource set, and the pilot signal is transmitted using transmit power ratio P6 on the p3-th symbol to the p4-th symbol in the resource set, or the pilot signal is transmitted using transmit power ratio P7 on the p5-th symbol to the p6-th symbol in the resource set. The transmit power ratio P5, the transmit power ratio P6, and the transmit power ratio P7 are all different.

It should be noted that the aforementioned transmit power ratio is not limited in the embodiments of the present application. For example, the transmit power ratio may include one or more of the following ratios: 1%, 2%, 5%, 10%, 20%, 25%, 33%, 40%, 50%, 60%, 66%, 70%, 75%, 80%, 90%, 95%, or 99%.

It should be noted that the resource set is not limited in the embodiments of the present application. The resource set may include one or more transmission resources. For example, the resource set may be an RB, and correspondingly, the above transmission resources may be REs.

The first transmission mode is associated with a sequence of the first signal. The sequence of the first signal is not limited in the embodiments of the present application. For example, the sequence of the first signal may be determined based on one or more of the following target sequences: a pseudo-random sequence (e.g., a Gold sequence), a zadoff-chu (ZC) sequence, an m sequence, an all-1 sequence, or a sequence processed based on one or more modulation methods including quadrature phase shift keying (QPSK), 16 quadrature amplitude modulation (16QAM), or 64 quadrature amplitude modulation (64QAM).

It should be noted that, in some implementations, the aforementioned determining the sequence of the first signal based on a target sequence may include that the sequence of the first signal is the target sequence. In some other implementations, determining the sequence of the first signal based on the target sequence may include that the sequence of the first signal is a sequence obtained by processing the target sequence.

If the first transmission mode is associated with the training result of the first model, the first model is used for processing the first signal to be transmitted. In some implementations, the transmit power of the first signal may be based on the first model. The first model is used for processing (e.g., linear superposition and/or nonlinear superposition) the first signal to be transmitted and other signals so that the processed signals can be transmitted in the non-orthogonal transmission mode. The transmit power ratio is used to indicate a ratio between the transmit power of the first signal on the target transmission resource and the total transmit power of a plurality of signals transmitted in non-orthogonal manner.

In some other implementations, the sequence of the first signal may be based on the first model. For example, the sequence of the first signal may be obtained by adjusting the target sequence using the first model, or in other words, the sequence of the first signal may be derived from the training results of the first signal sequence based on different first models.

In the embodiments of the present application, any one of the aforementioned types of information can be individually associated with the first transmission mode. Certainly, in the embodiments of the present application, the first transmission mode can be associated with at least two types of the aforementioned information. Furthermore, the association manner is not limited in the embodiments of the present application. For example, the association between the first transmission mode and the aforementioned information may be defined by a formula. As another example, the association between the first transmission mode and the aforementioned information may be defined by a table, and the table may be configured, preconfigured or predefined.

To facilitate understanding, the association relationship described above will be introduced below with reference to Table 1. In the following, the association relationship is assumed to be an association relationship between a transmission mode, transmission resources (time domain resources and frequency domain resources) for transmitting the first signal, and the transmit power of the first signal. As shown in Table 1, if the index of the first transmission mode is 1, then the time domain resources for transmitting the first signal are all the time domain symbols, the frequency domain resources for transmitting the first signal are all the frequency domain subcarriers, and the transmit power of the first signal is the default first signal power scheme, which indicates a transmit power ratio of 25% for the first signal. If the index of the first transmission mode is 2, then the time domain resources for transmitting the first signal is derived from a first time domain pattern indicating that the symbols for transmitting the first signal are spaced apart by f symbols, which equals to 1 or 2; the frequency domain resources for transmitting the first signal is derived from the first frequency domain pattern indicating that the subcarriers for transmitting the first signal are spaced apart by d subcarriers, which equals to 1 or 2; and the transmit power of the first signal is a first power scheme indicating a transmit power ratio of 20% for the first signal. If the index of the first transmission mode is 3, the time domain resources for transmitting the first signal is derived from a second time domain pattern, the frequency domain resources for transmitting the first signal is derived from a second frequency domain pattern, and the transmit power of the first signal is a second power scheme. If the index of the first transmission mode is 4, the time domain resources for transmitting the first signal is derived from a third time domain pattern, the frequency domain resources for transmitting the first signal is derived from a third frequency domain pattern, and the transmit power of the first signal is a third power scheme.

Table 1

| Index | Time domain resources for transmitting the first signal | Frequency domain resources for transmitting the first signal | Transmit power of the first signal |
|---|---|---|---|
| 1 | All time domain symbols | All frequency domain subcarriers | Default power solution |
| 2 | First time domain pattern | First frequency domain pattern | First power solution |
| 3 | Second time domain pattern | Second frequency domain pattern | Second power solution |
| 4 | Third time domain pattern | Third frequency domain pattern | Third power solution |
| 5 | ... | ... | ... |
| 6 | ... | ... | ... |

It should be noted that the first transmission mode may be one of a plurality of transmission modes supported by the transmitting terminal, and the plurality of transmission modes may include an orthogonal transmission mode and/or a non-orthogonal transmission mode. Certainly, in the embodiments of the present application, the plurality of transmission modes may further include the multiple transmission modes introduced above. In addition, the above-mentioned first reception mode may be one of a plurality of reception modes supported by the transmitting terminal, and the reception modes may include receiving based on a conventional receiving terminal and/or receiving based on a receiving terminal with a second model. For the second model, reference may be made to the description provided earlier.

Based on the preceding descriptions, it can be known that differences in the aforementioned information (e.g., the sequence of the first signal, the transmit power of the first signal, the transmission scenario of the first signal, the transmission condition of the first signal, the transmission resource for transmitting the first signal, the training result of the first model) can, to some extent, influence the first transmission mode. Correspondingly, if the first transmission mode changes, the first reception mode corresponding to the first transmission mode will also change. Therefore, it can be considered that the association relationship between the first transmission mode and the first reception mode is associated with one or more of the above-mentioned information, or in other words, the association relationship between the first transmission mode and the first reception mode is affected by the above-mentioned one or more information. Of course, in the embodiments of the present application, it may also be understood that the first receiving scheme is associated with one or more types of the aforementioned information.

That is to say, the above-mentioned matching relationship (or association relationship) between the first transmission mode and the first reception mode is associated with one or more of: the sequence of the first signal, the transmit power of the first signal, the transmission scenario of the first signal, the transmission condition of the first signal, the transmission resource for transmitting the first signal, or the training result of the first model. The first model is used for processing the first signal to be transmitted.

It should be noted that, as introduced above, the first signal may be associated with a plurality of transmission modes. Correspondingly, the first signal may also be associated with a plurality of reception modes. In this case, an association relationship may exist between the plurality of transmission modes and the plurality of reception modes, and the association relationship may include the association relationship between the first transmission modes and the first reception modes.

The above-mentioned association relationship is not specifically limited in the embodiments of the present application. For example, the above association relationship may indicate that different transmission modes correspond to different reception modes. As another example, the above association relationship may indicate that, among the different transmission modes, some transmission modes correspond to different reception modes. Certainly, in the embodiments of the present application, the association relationship may indicate that the different transmission modes correspond to the same reception mode.

In addition, in the embodiments of the present application, the above-mentioned association relationship may be a direct association between the transmission modes and the reception modes, for example, the indication information indicating the first transmission mode is directly associated with the indication information indicating the first reception mode. Certainly, in the embodiments of the present application, the association between the first reception mode and the first transmission mode may be implemented via second information. That is to say, the above-mentioned association relationship includes an association relationship between the first transmission mode and the second information and an association relationship between the first reception mode and the second information. In other words, the first reception mode is determined based on one or more of second information.

In some implementations, the one or more second information includes: the indication information indicating the first transmission mode, the configuration information of the first signal, or the transmission scenario of the first signal.

In an example where the second information includes the indication information indicating the first transmission mode, the first reception mode associated with the first transmission mode may be determined based on the association relationship between the reception modes and the transmission modes, which may be referred to the above description and will not be repeated here for the sake of brevity.

In an example where the second information includes the configuration information of the first signal, the configuration information of the first signal associated with the first transmission mode may be determined based on an association relationship between the configuration information of signals and transmission modes. Accordingly, the first reception mode associated with the configuration information of the first signal may be determined based on the association relationship between the configuration information of signals and reception modes. The configuration information of signals is similar to the configuration information of the first signal introduced above, and reference may be made to the previous description for details, which will not be repeated here for brevity.

Taking the transmission scenario in which the second information includes the first signal as an example, the transmission scenario of the first signal associated with the first transmission mode may be determined based on an association relationship between transmission scenarios of signals and transmission modes. Accordingly, the first reception mode associated with the transmission scenario of the first signal may be determined based on an association between transmission scenarios of signals and reception modes.

In addition, in the embodiments of the present application, the above-mentioned association relationships may be configured, for example, by the network device. The above association relationships may also be predefined, for example, specified by a communication protocol. Certainly, the above association relationships may also be pre-configured, for example, may be pre-configured on the first device and/or the second device during manufacturing.

The first transmission mode and the first reception mode in the embodiments of the present application are described above. The first information in the embodiments of the present application will be introduced below with reference to Example 1 and Example 2. It should be noted that, in the embodiments of the present application, the first device may be the transmitting terminal of the first signal, and the second device may be the receiving terminal of the first signal. In an example where the first signal is an uplink signal (e.g., an uplink pilot), the first device may be a terminal device, and correspondingly, the second device may be a network device. In an example where the first signal is a downlink signal (e.g., a downlink pilot), the first device may be a network device, and correspondingly, the second device may be a terminal device.

Example 1: the first information includes the indication information indicating the first transmission mode.

In other words, the first information is used to indicate the first transmission mode. For example, the first information can carry the index of the first transmission mode. In an example where the first signal is a pilot signal, the index of the first transmission mode can be the pilot pattern of the pilot signal.

The scheme for determining the first reception mode is not limited in the embodiments of the present application. To facilitate understanding, the following descriptions are provided with reference to Example 1-1, Example 1-2, and Example 1-3.

In Example 1-1, the first device transmits third information to the second device, which is used to indicate the first reception mode.

That is to say, the first device can directly transmit the third information to the second device to indicate the first reception mode. Accordingly, the second device can determine the first reception mode based on the third information.

In some implementations, the third information may indicate the first reception mode by indicating the index of the first reception mode. The index of the first reception mode can be referred to the description above, which is not repeated here for brevity. Certainly, in the embodiments of the present application, if the first reception mode is based on a second model, then the indication information indicating the first reception mode may further include information used to indicate the function of the second model and/or information used to indicate the second model.

The aforementioned information used to indicate the second model may be, for example, the identifier (ID) of the second model.

The aforementioned information used to indicate the function of the second model may be, for example, the function identifier (ID) of the second model. Correspondingly, in an example where the first signal is a pilot signal, the function ID is used to indicate that the model may be used to implement the function of performing channel estimation for pilot signals. Taking the non-orthogonal transmission of the first signal and the data signal as an example, the function ID is used to indicate that the model may implement the data parsing function for data signals.

To facilitate understanding, the wireless communication method according to the embodiments of the present application will be introduced below with reference to FIGS. 11 and 12. Referring to FIG. 11, in this example, the first signal is a downlink signal, the first device is a network device, and the second device is a terminal device. The method shown in FIG. 11 includes steps S1110 and S1120.

In step S1110, the network device transmits the first information to the terminal device to indicate the first transmission mode.

In step S1120, the network device transmits the third information to the terminal device to indicate the first reception mode.

Referring to FIG. 12, in this example, the first signal is an uplink signal, the first device is a terminal device, and the second device is a network device. The method shown in FIG. 12 includes steps S1210 and S1220.

In step S1210, the terminal device transmits the first information to the network device to indicate the first transmission mode.

In step S1220, the terminal device transmits the third information to the network device to indicate the first reception mode.

In Example 1-2, the first information includes fourth information, and the fourth information is used for determining the second model applied to the first reception mode.

That is to say, the first device can directly transmit the second model to the second device by transmitting the fourth information to the second device.

In some implementations, the fourth information includes one or more of: the second model, information used to indicate the second model, information used to indicate a weight of the second model, and the information used to indicate a function of the second model.

In an example where the fourth information includes the second model, the fourth information may include the information about the second model, such as hyper parameters of the second model, the structure of the second model, and the weight of the second model.

In an example where the fourth information includes the information used to indicate the second model, the fourth information may include an identifier of the second model and/or a function identifier of the second model. For the identifier of the second model and the function identifier of the second model, reference may be made to the description provided above, which will not be repeated here for the sake of brevity.

In an example where the fourth information includes the information used to indicate the weight of the second model, the information used to indicate the weight of the second model can be considered as the weight information required for constructing the second model.

It should be noted that the above fourth information and the information described earlier used to indicate the first transmission mode are both carried in the first information. Certainly, in the embodiments of the present application, the fourth information and the information used to indicate the first transmission mode may also be transmitted via different information, which is not limited in the embodiments of the present application.

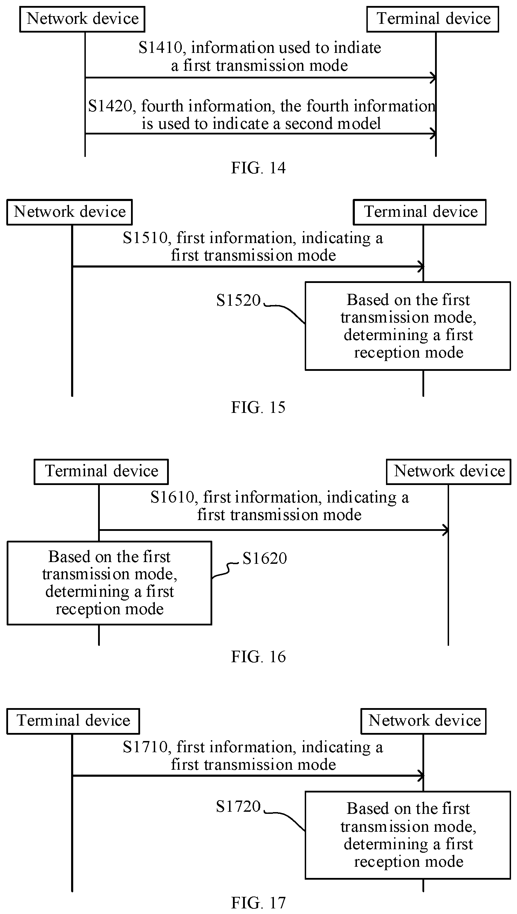

To facilitate understanding, the wireless communication method according to the embodiments of the present application will be introduced below with reference to FIGS. 13 and 14. FIG. 13 is a flowchart of a wireless communication method according to another embodiment of the present application. The method shown in FIG. 13 includes steps S1310 and S1320. Referring to FIG. 13, in this example, the first signal is an uplink signal, the first device is a terminal device, and the second device is a network device.

In step S1310, the terminal device transmits the information used to indicate the first transmission mode to the network device.

In step S1320, the terminal device transmits the fourth information to the network device, and the fourth information includes the second model.

FIG. 14 is a flowchart of a wireless communication method according to another embodiment of the present application. The method shown in FIG. 14 includes steps S1410 and S1420. Referring to FIG. 14, in this example, the first signal is a downlink signal, the first device is a network device, and the second device is a terminal device.

In step S1410, the network device transmits the information used to indicate the first transmission mode to the terminal device.

In step S1420, the network device transmits the fourth information to the terminal device, and the fourth information is used to indicate the second model.

In Example 1-3, the first reception mode is determined by the second device.

That is to say, the second device determines the first reception mode based on the first information. In other words, the second device autonomously determines the first reception mode based on the first information.

The scheme for the second device to determine the first reception mode is not limited in the embodiments of the present application. For example, the second device may determine the first reception mode matching the first transmission mode based on the association relationship described previously.

In the embodiments of the present application, the second device may be the transmitting terminal of the first signal. In an example where the first signal is an uplink signal, the second device may be a terminal device. In an example where the first signal is a downlink signal, the second device may be a network device. Certainly, the second device may be the receiving terminal of the first signal. In an example where the first signal is an uplink signal, the second device may be a network device. In an example where the first signal is a downlink signal, the second device may be a terminal device.

In the embodiments of the present application, the information used to indicate the first transmission mode (e.g., the fifth information) may be transmitted between the first device and the second device. Certainly, in the embodiments of the present application, the information used to indicate the first transmission mode may not be transmitted between the first device and the second device, which is not limited in the embodiments of the present application.

To facilitate understanding, the wireless communication method according to the embodiments of the present application will be introduced below with reference to FIGS. 15 to 18. FIG. 15 is a flowchart of a wireless communication method according to another embodiment of the present application. The method shown in FIG. 15 includes steps S1510 and S1520. Referring to FIG. 15, in this example, the first signal is a downlink signal, the first device is a network device, and the second device is a terminal device.

In step S1510, the network device transmits the first information to the terminal device to indicate the first transmission mode.

In step S1520, the terminal device determines the first reception mode based on the first transmission mode.

FIG. 16 is a flowchart of a wireless communication method according to another embodiment of the present application. The method shown in FIG. 16 includes steps S1610 and S1620. As shown in FIG. 16, in this example, the first signal is a downlink signal, the first device is a network device, and the second device is a terminal device.

In step S1610, the terminal device transmits the first information to the network device to indicate the first transmission mode.

In step S1620, the terminal device determines the first reception mode based on the first transmission mode.

FIG. 17 is a flowchart of a wireless communication method according to another embodiment of the present application. The method shown in FIG. 17 includes steps S1710 and S1720. As shown in FIG. 17, in the example, the first signal is an uplink signal, the first device is a terminal device, and the second device is a network device.

In step S1710, the terminal device transmits the first information to the network device to indicate the first transmission mode.

In step S1720, the network device determines the first reception mode based on the first transmission mode.

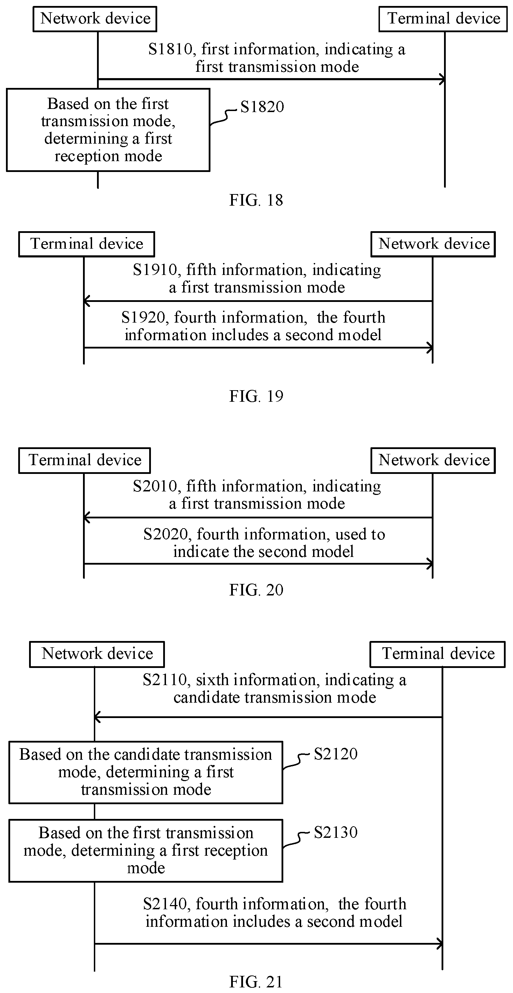

FIG. 18 is a flowchart of a wireless communication method according to another embodiment of the present application. The method shown in FIG. 18 includes steps S1810 and S1820. Referring to FIG. 18, in this example, the first signal is an uplink signal, the first device is a network device, and the second device is a terminal device.

In step S1810, the network device transmits the first information to the terminal device to indicate the first transmission mode.

In step S1820, the network device determines the first reception mode based on the first transmission mode.

In Example 2, the first information includes the indication information indicating the first reception mode.

In some implementations, the indication information indicating the first reception mode can be embodied by the fourth information. That is to say, the first information includes the fourth information. For relevant details regarding the fourth information, reference may be made to the descriptions above, which are not repeated here for brevity. Certainly, in the embodiments of the present application, the aforementioned indication information indicating the first reception mode may directly indicate the first reception mode, rather than indicating the model applied to the first reception mode.

In some implementations, the above method further includes: transmitting, by the second device, fifth information to the first device; where the fifth information includes the indication information indicating the first transmission mode. Step S1010 includes: in response to receiving the fifth information, transmitting, by the first device, the first information to the second device.

In the embodiments of the present application, the second device may be a network device, and correspondingly, the first device may be a terminal device. Taking the scenario of transmitting an uplink signal as an example, the network device can configure a first transmission mode for the terminal device, and correspondingly, the terminal device can indicate the first reception mode to the network device via the first information. That is to say, in the embodiments of the present application, the second device may be the receiving terminal of the first signal, and the first device may be the transmitting terminal of the first signal.

To facilitate understanding, the wireless communication method according to the embodiments of the present application will be introduced below with reference to FIGS. 19 and 20. FIG. 19 is a flowchart of a wireless communication method according to another embodiment of the present application. The method described in FIG. 19 includes steps S1910 and S1920. As shown in FIG. 19, in this example, the first signal is an uplink signal, the first device is a terminal device, and the second device is a network device.

In step S1910, the network device transmits the fifth information to the terminal device to indicate the first transmission mode.

In step S1920, the terminal device transmits the fourth information to the network device, where the fourth information includes the second model.

FIG. 20 is a flowchart of a wireless communication method according to another embodiment of the present application. Referring to FIG. 20, the method described in FIG. 20 includes steps S2010 and S2020. Referring to FIG. 20, in this example, the first signal is an uplink signal, the first device is a terminal device, and the second device is a network device.

In step S2010, the network device transmits the fifth information to the terminal device to indicate the first transmission mode.

In step S2020, the terminal device transmits the fourth information to the network device, where the fourth information is used to indicate the second model.

In some implementations, the above method further includes: receiving, by the first device, the sixth information transmitted by the second device. The sixth information is used to indicate a candidate transmission mode suggested by the second device for the first signal, and the candidate transmission mode is used to indicate the non-orthogonal transmission of the first signal on the target transmission resource. Based on the sixth information, the first device can determine the first transmission mode. The above step S1010 includes: in response to receiving the sixth information, transmitting, by the first device, the first information to the second device.

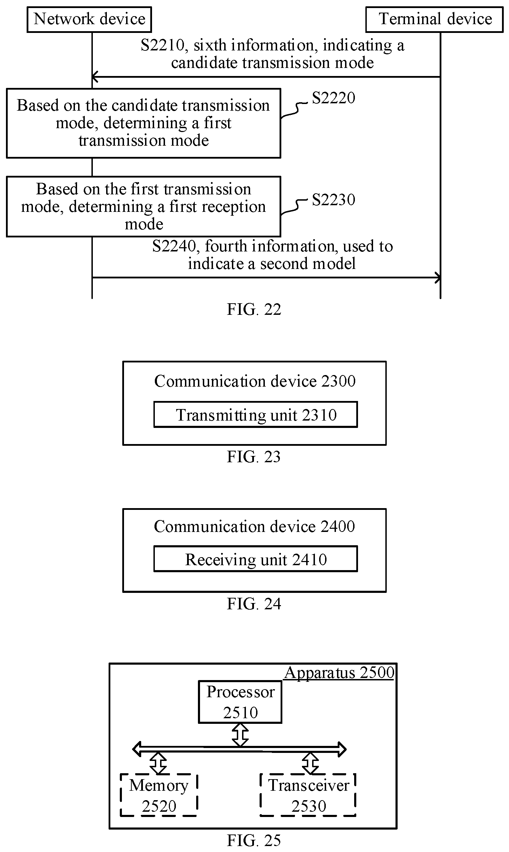

To facilitate understanding, the wireless communication method according to the embodiments of the present application will be introduced below with reference to FIGS. 21 and 22. FIG. 21 is a flowchart of a wireless communication method according to another embodiment of the present application. The method shown in FIG. 21 includes steps S2110 and S2120. As shown in FIG. 21, in this example, the first signal is a downlink signal, the first device is a network device, and the second device is a terminal device.

In step S2110, the terminal device transmits the sixth information to the network device to indicate a candidate transmission mode.

In step S2120, the network device determines the first transmission mode based on the candidate transmission mode. The first transmission mode may be the candidate transmission mode.

In step S2130, the network device determines the first reception mode based on the first transmission mode.

In step S2140, the network device transmits the fourth information to the terminal device, which includes the second model applied to the first reception mode.

FIG. 22 is a flowchart of a wireless communication method according to another embodiment of the present application. The method shown in FIG. 22 includes steps S2210 and S2220. Referring to FIG. 22, in this example, the first signal is a downlink signal, the first device is a network device, and the second device is a terminal device.

In step S2210, the terminal device transmits the sixth information to the network device to indicate a candidate transmission mode.

In step S2220, the network device determines the first transmission mode based on the candidate transmission mode. The first transmission mode may be the candidate transmission mode.

In step S2230, the network device determines the first reception mode based on the first transmission mode.

In step S2240, the network device transmits the fourth information to the terminal device, which is used to indicate the second model applied to the first reception mode.

It should be noted that the way to transmit the first information is not limited in the embodiments of the present application. If the first information is downlink information, the first information may be carried in one or more of following information: a broadcast message, a radio resource control (RRC) message, a media access control control element (MAC CE), downlink control information (DCI), signaling in random access, a physical downlink control channel (PDCCH), a physical downlink shared channel (PDSCH), or a dedicated channel for the first information.

In some implementations, the aforementioned broadcast message may include system information, such as one or more of the following: a master system information block (MIB), a system information block (SIB), or SIB1 (also known as remaining minimum system information (RMSI)).

In some implementations, the signaling in the random access may include one or more of Msg B, Msg 2, or Msg 4.

In some implementations, the dedicated channel for the first information may be a channel dedicated to transmitting information related to the first model and/or the second model. Certainly, in the embodiments of the present application, the dedicated channel may be a channel dedicated to transmitting the first information.

Furthermore, if the other information (e.g., the fifth information or the sixth information) involved in the embodiments of the present application is downlink information, these information may be carried by using the same methods described above. Certainly, in the embodiments of the present application, other carrying methods may be used to carry theses information.

If the first information is uplink information, the first information is carried in one or more of the following information: an RRC message, UCI, signaling in random access, a physical uplink control channel (PUCCH), a physical uplink shared channel (PUSCH), terminal capability information, or a dedicated channel for the first information. The dedicated channel for the first information may be a channel dedicated to transmitting information related to the first model and/or the second model. Certainly, in the embodiments of the present application, the dedicated channel may be a channel dedicated to transmitting the first information.

In some implementations, the aforementioned signaling in the random access may include Msg A and/or Msg 3.

In some implementations, the dedicated channel for the first information may be a channel dedicated to transmitting information related to the first model and/or the second model. Certainly, in the embodiments of the present application, the dedicated channel may be a channel dedicated to transmitting the first information.

Furthermore, for the other information involved in the embodiments of the present application (e.g., the fifth information or the sixth information), if it is uplink information, then it can be carried by using the same methods described above. Certainly, in the embodiments of the present application, other carrying methods may be used to carry these information.

As mentioned earlier, the pilot signal is also known as the reference signal. In the embodiments of the present application, the type of the reference signal is not limited. For example, the reference signal may include one or more of the following: a CSI-RS, a DMRS, a phase tracking signal (PT-RS), a sounding reference signal (SRS), a synchronization signal and physical broadcast channel block (SSB, also known as SS/PBCH block), or a positioning reference signal (PRS).

The method embodiments of the present application are described in detail above with reference to FIGS. 1 to 22, and the apparatus embodiments of the present application will be described in detail below with reference to FIGS. 23 to 25. It should be understood that the description of the method embodiments corresponds to the description of the apparatus embodiments. Therefore, for any sections not elaborated in detail below, reference may be made to the prior method embodiments.

FIG. 23 is a schematic diagram of a communication device according to the embodiments of the present application. The communication device 2300 is a first device, and the communication device 2300 includes a transmitting unit 2310.

The transmitting unit 2310 is configured to transmit first information to a second device, and the first information is used for determining the first reception mode matching the first transmission mode. The first transmission mode is used for non-orthogonal transmission of the first signal on a target transmission resource, and the first reception mode is used for receiving the first signal on the target transmission resource.

In some implementations, the first transmission mode is associated with one or more of: a sequence of the first signal, transmit power of the first signal, a transmission scenario of the first signal, a transmission condition of the first signal, a transmission resource for transmitting the first signal, or a training result of a first model. Here, the first model is used for processing the first signal to be transmitted.

In some implementations, if the first transmission mode is associated with the transmission resource for transmitting the first signal, the transmission resource for transmitting the first signal is determined based on a pattern of the first signal.

In some implementations, if the first transmission mode is associated with the transmission scenario of the first signal, the transmission scenario of the first signal is associated with one or more of: a cell in which the first signal is transmitted, an environment in which the first signal is transmitted, or the motion state of the first device and/or the second device.

In some implementations, if the first transmission mode is associated with the transmission condition of the first signal, the transmission condition of the first signal is associated with one or more of the following: a transmission configuration of the first signal, an antenna configuration of the first signal, and associated with channel characteristics of a channel used for transmitting the first signal.

In some implementations, the first information includes the indication information indicating the first transmission mode.

In some implementations, the first reception mode is determined based on one or more of the following second information: the indication information indicating the first transmission mode, the configuration information of the first signal, or the transmission scenario of the first signal.

In some implementations, the first reception mode is determined based on an association relationship between a reception mode and the second information, and the association relationship is determined based on one or more of the following ways: predefining, determining by the second device, or preconfiguring by a network device.

In some implementations, the transmitting unit is further configured to: transmit third information to the second device, and the third information is used to indicate the first reception mode.

In some implementations, the first information includes fourth information, and the fourth information is used for determining a second model applied to the first reception mode.

In some implementations, the fourth information includes one or more of the following: the second model, information used to indicate the second model, information used to indicate a weight of the second model, and information used to indicate a function of the second model.

In some implementations, the communication device further includes a receiving unit, which is configured to receive fifth information transmitted by the second device. The fifth information includes indication information indicating the first transmission mode. The transmitting, by the first device, the first information to the second device includes: in response to receiving the fifth information, transmitting, by the first device, the first information to the second device.

In some implementations, the receiving unit is further configured to: receive sixth information transmitted by the second device, which is used to indicate a candidate transmission mode suggested by the second device for multiple types of transmission signals. The candidate transmission mode is used to indicate that the first signal is to be transmitted non-orthogonally on the target transmission resource. The receiving unit is further configured to: determine, by the first device, the first transmission mode based on the sixth information. The transmitting, by the first device, the first information to the second device includes: in response to receiving the sixth information, transmitting, by the first device, the first information to the second device.

In some implementations, the first information is carried in one or more of: a broadcast message, an RRC message, a MAC CE, DCI, signaling in random access, a PDCCH, a PDSCH, or a dedicated channel for the first information.

In some implementations, the first information is carried in one or more of the following information: an RRC message, UCI, signaling in random access, a PUCCH; a PUSCH, terminal capability information, or a dedicated channel for the first information.

In some implementations, if the first device is a network device, the second device is a terminal device. Alternatively, if the first device is a terminal device, the second device is a network device.

In some implementations, the first signal is a reference signal; and/or signals non-orthogonally transmitted on the target transmission resource include the first signal and a data signal.

In some implementations, if the non-orthogonally transmitted signals include the reference signal and the data signal, the first reception mode is used for receiving the first signal and the data signal.

FIG. 24 is a schematic diagram of a communication device according to the embodiments of the present application. The communication device 2400 shown in FIG. 24 is a second device. The communication device 2400 includes a receiving unit 2410.

The receiving unit 2410 is configured to receive first information transmitted by a first device, which is used for determining the first reception mode matching the first transmission mode. The first transmission mode is used for non-orthogonal transmission of a first signal on a target transmission resource, and the first reception mode is used for receiving the first signal on the target transmission resource.

In some implementations, the first transmission mode is associated with one or more of: a sequence of the first signal, transmit power of the first signal, a transmission scenario of the first signal, a transmission condition of the first signal, a transmission resource for transmitting the first signal, or a training result of a first model. The first model is used for processing the first signal to be transmitted.

In some implementations, if the first transmission mode is associated with the transmission resource for transmitting the first signal, the transmission resource for transmitting the first signal is determined based on a pattern of the first signal.

In some implementations, if the first transmission mode is associated with the transmission scenario of the first signal, the transmission scenario of the first signal is associated with one or more of: the cell in which the first signal is transmitted, an environment in which the first signal is transmitted, or a motion state of the first device and/or the second device.

In some implementations, if the first transmission mode is associated with the transmission condition of the first signal, the transmission condition of the first signal is associated with the transmission configuration of the first signal and/or channel characteristics of a channel used for transmitting the first signal.

In some implementations, the first information includes the indication information indicating the first transmission mode.

In some implementations, the first reception mode is determined based on one or more of the following second information: the indication information indicating the first transmission mode, the configuration information of the first signal, or the transmission scenario of the first signal.

In some implementations, the first reception mode is determined based on an association relationship between a reception mode and the second information. The association relationship is determined based on one or more following ways: predefining; determining by the second device; or preconfiguring by a network device.

In some implementations, the receiving unit is further configured to receive third information transmitted by the first device. The third information is used to indicate the first reception mode.

In some implementations, the first information includes fourth information, which is used for determining a second model for receiving the first signal.

In some implementations, the fourth information includes one or more of: the second model, the information used to indicate the second model, the information used to indicate a weight of the second model, and the information used to indicate a function of the second model.

In some implementations, the communication device further includes a transmitting unit, which is configured to transmit fifth information to the first device. The fifth information includes indication information indicating the first transmission mode. The receiving, by the second device, the first information transmitted by the first device includes: in response to transmitting the fifth information, receiving, by the second device, the first information transmitted by the first device.

In some implementations, the transmitting unit is further configured to: transmit sixth information to the first device, which is used to indicate a candidate transmission mode suggested by the second device for multiple types of transmission signals. The candidate transmission mode is used to indicate that the first signal is to be transmitted non-orthogonally on the target transmission resource.

In some implementations, the first information is carried in one or more of the following information: a broadcast message, an RRC message, a MAC CE, DCI, signaling in random access, a PDCCH, a PDSCH, or a dedicated channel for the first information.

In some implementations, the first information is carried in one or more of the following information: an RRC message, UCI, signaling in random access, a PUCCH, a PUSCH, terminal capability information, or a dedicated channel for the first information.

In some implementations, if the first device is a network device, the second device is a terminal device. Alternatively, if the first device is a terminal device, the second device is a network device.

In some implementations, the first signal is a reference signal; and/or signals non-orthogonally transmitted on the target transmission resource include the first signal and a data signal.

In some implementations, if the non-orthogonally transmitted signals include the reference signal and the data signal, the first reception mode is used for receiving the first signal and the data signal.

In an optional embodiment, the transmitting unit 2310 may be a transceiver 2530. The communication apparatus 2500 may further include a processor 2510 and a memory 2520, as specifically shown in FIG. 25.

In an optional embodiment, the receiving unit 2410 may be a transceiver 2530. The communication apparatus 2500 may further include a transceiver 2530 and a memory 2520, as specifically shown in FIG. 25.

FIG. 25 is a block diagram of a communication apparatus according to an embodiment of the present application. The dashed lines in FIG. 25 indicate that the unit or module is optional. The apparatus 2500 may be used to implement the methods described in the foregoing method embodiments. The apparatus 2500 may be a chip, a terminal device, or a network device.

The apparatus 2500 may include one or more processors 2510. The processor 2510 can support the apparatus 2500 to implement the methods described in the foregoing method embodiments. The processor 2510 may be a general-purpose processor or a special-purpose processor. For example, the processor may be a central processing unit (CPU). Alternatively, the processor may be other general-purpose processors, digital signal processors (DSP), application specific integrated circuits (ASIC), field programmable gate arrays (FPGA) or other programmable logic devices, discrete gate or transistor logic devices, discrete hardware components, etc. A general purpose processor may be a microprocessor, or the processor may be any conventional processor or the like.

The apparatus 2500 may further include one or more memories 2520. The memory 2520 has program(s) stored thereon, which can be executed by the processor 2510 to cause the processor 2510 to perform the methods described in the foregoing method embodiments. The memory 2520 may be independent of the processor 2510 or may be integrated into the processor 2510.

The apparatus 2500 may further include a transceiver 2530. The processor 2510 can communicate with other devices or chips through the transceiver 2530. For example, the processor 2510 may transmit and receive data with other devices or chips through the transceiver 2530.

The embodiments of the present application further provide a computer-readable storage medium configured to store a program. The computer-readable storage medium may be applied to a terminal or network device provided in the embodiments of the present application, and the program enables the computer to execute the methods performed by the terminal or network device in various embodiments of the present application.

The embodiments of the present application further provide a computer program product. The computer program product includes a program. This computer program product may be applied to a terminal or network device provided in the embodiments of the present application, and the program enables a computer to execute the methods performed by the terminal or network device in various embodiments of the present application.

The embodiments of the present application further provide a computer program. The computer program may be applied to a terminal or network device provided in the embodiments of the present application, and the computer program causes a computer to perform the methods performed by the terminal or network device in various embodiments of the present application.

It is to be understood that the terms "system" and "network" may be used interchangeably in the present application. In addition, terms used in the present application are only used to explain specific embodiments of the present application and are not intended to limit the present application. The terms "first", "second", "third", "fourth" or the like in the specification, claims and the drawings are used to distinguish different objects and are not used to describe a specified sequence. In addition, the terms "include", "comprise" and "have" and any variations thereof are intended to cover non-exclusive inclusion.

In the embodiments of the present application, "indicate" mentioned in the embodiments of the present application may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the embodiment of the present application, "B corresponding to A" means that B is associated with A, and B may be determined based on A. However, it should also be understood that determining B based on A does not mean that B is determined based on A alone; and B may also be determined based on A and/or other information.

In the embodiments of the present application, the term "correspond" may mean that there is a direct correspondence or indirect correspondence between the two, or it may mean that there is an associated relationship between the two, or it may mean a relationship of indicating and being indicated, configuring and being configured, or the like.

In the embodiment of the present application, "predefined" or "preconfigured" may be achieved by pre-storing corresponding codes, forms or other means used for indicating relevant information in devices (e.g., including a terminal device and network device), and the present application is not limited to the specific implementation thereof. For example, predefined may refer to what is defined in a protocol.

In the embodiments of the present application, the "protocol" may refer to a standard protocol in the field of communication, and may include, for example, LTE protocol, NR protocol, or related protocols applied in future communication systems, which are not limited in the present application.

In the embodiments of the present application, the term "and/or" is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

In various embodiments of the present application, the magnitude of the serial numbers of above processes does not mean the order of execution. The order of execution of each process should be determined by its function and internal logic, and should not constitute any limitation on the implementation process of the embodiments of the present application.

In the several embodiments provided in the present application, it is to be understood that the disclosed systems, devices and methods may be implemented in other ways. For example, the apparatus embodiments described above are merely illustrative. For example, the division of the units is merely a logical function division. There may be other division ways in the actual implementation. For example, multiple units or components may be combined or integrated into another system, or some features may be ignored or not implemented. Another point is that the mutual coupling or direct coupling or communication connection illustrated or discussed may be indirect coupling or communication connection through some interface, apparatus or units, and may be electrical, mechanical or other forms.

The units described as separation parts may or may not be physically separated, and the component displayed as a unit may be or may not be a physical unit, that is, it may be located at one place, or it may be distributed to multiple network units. Some or all of the units may be selected according to actual requirements to achieve the purpose of the schemes of the embodiments.

In addition, various functional units in various embodiments of the present application may be integrated into one processing unit, various units may exist physically alone, or two or more units may be integrated into one unit.

In the above embodiments, all or part of them may be implemented by software, hardware, firmware or any combinations thereof. When implemented by the software, all or part of them may be implemented in the form of a computer program product. The computer program product includes one or more computer instructions. When the computer program instructions are loaded and executed on a computer, the processes or functions described in the embodiments of the present application are generated in whole or in part. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions may be transmitted from a website, a computer, a server or a data center to another website, computer, server, or data center via wired (e.g., a coaxial cable, optical fiber, digital subscriber line (DSL)) or wireless (e.g., infrared, wireless, microwave) means. The computer-readable storage medium may be any available medium that may be read by the computer or a data storage device such as a server or a data center that includes one or more available media. The available media may be magnetic media (e.g., a floppy disk, a hard disk or a magnetic tape), optical media (e.g., a digital video disc (DVD)), or semiconductor media (e.g., a solid state disk (SSD)).

The foregoing descriptions are merely specific implementations of the present application, but the protection scope of the present application is not limited thereto. Variations or replacements that any person skilled in the art could readily conceive of within the technical scope disclosed in the present application shall fall within the protection scope of the present application. Therefore, the protection scope of the present application shall be subject to the protection scope of the claims.

**Claims**

1. A wireless communication method, comprising:

    transmitting, by a first device, first information to a second device; wherein the first information is used for determining a first reception mode matching a first transmission mode;
    the first transmission mode is used for non-orthogonal transmission of a first signal on a target transmission resource, and the first reception mode is used for receiving the first signal on the target transmission resource.

2. The method according to claim 1, wherein the first transmission mode is associated with one or more of:

    a sequence of the first signal,
    transmit power of the first signal,
    a transmission scenario of the first signal,
    a transmission condition of the first signal,
    a transmission resource for transmitting the first signal, or
    a training result of a first model, wherein the first model is used for processing the first signal to be transmitted.

3. The method according to claim 2, wherein if the first transmission mode is associated with the transmission resource for transmitting the first signal, the transmission resource for transmitting the first signal is determined based on a pattern of the first signal.

4. The method according to claim 2 or 3, wherein if the first transmission mode is associated with the transmission scenario of the first signal, the transmission scenario of the first signal is associated with one or more of:

> a cell in which the first signal is transmitted,
> an environment in which the first signal is transmitted, or
> a motion state of the first device and/or the second device.

5. The method according to any one of claims 2 to 4, wherein if the first transmission mode is associated with the transmission condition of the first signal, the transmission condition of the first signal is associated with one or more of:

> a transmission configuration of the first signal,
> an antenna configuration of the first signal, or
> associated with channel characteristics of a channel used for transmitting the first signal.

6. The method according to any one of claims 1 to 5, wherein the first information comprises indication information indicating the first transmission mode.

7. The method according to claim 6, wherein the first reception mode is determined based on one or more of the following second information: the indication information indicating the first transmission mode, configuration information of the first signal, or a transmission scenario of the first signal.

8. The method according to claim 7, wherein the first reception mode is determined based on an association relationship between a reception mode and the second information; and the association relationship is determined based on one or more of the following ways: predefining, determining by the second device, or preconfiguring by a network device.

9. The method according to claim 6, further comprising:
transmitting, by the first device, third information to the second device; wherein the third information is used to indicate the first reception mode.

10. The method according to any one of claims 1 to 9, wherein the first information comprises fourth information, and the fourth information is used for determining a second model applied to the first reception mode.

11. The method according to claim 10, wherein the fourth information comprises one or more of:

> the second model,
> information used to indicate the second model,
> information used to indicate a weight of the second model, or
> information used to indicate a function of the second model.

12. The method according to claim 10 or 11, further comprising:

> receiving, by the first device, fifth information transmitted by the second device; wherein the fifth information comprises indication information indicating the first transmission mode;
> wherein transmitting, by the first device, the first information to the second device comprises:
> in response to receiving the fifth information, transmitting, by the first device, the first information to the second device.

13. The method according to claim 10 or 11, further comprising:

> receiving, by the first device, sixth information transmitted by the second device; wherein the sixth information is used to indicate a candidate transmission mode suggested by the second device for multiple types of transmission signals, and the candidate transmission mode is used to indicate that the first signal is to be transmitted non-orthogonally on the target transmission resource; and
> determining, by the first device, the first transmission mode based on the sixth information;
> wherein transmitting, by the first device, the first information to the second device comprises:
> in response to receiving the sixth information, transmitting, by the first device, the first information to the second device.

14. The method according to any one of claims 1 to 13, wherein the first information is carried in one or more of the following information: a broadcast message, an RRC message, a MAC CE, DCI, signaling in random access, a PDCCH, a PDSCH, or a dedicated channel for the first information.

15. The method according to any one of claims 1 to 13, wherein the first information is carried in one or more of the following information: an RRC message, UCI, signaling in random access, a PUCCH, a PUSCH, terminal capability information, or a dedicated channel for the first information.

16. The method according to any one of claims 1 to 13, wherein if the first device is a network device, the second device is a terminal device; or
if the first device is a terminal device, the second device is a network device.

17. The method according to any one of claims 1 to 16, wherein the first signal is a reference signal; and/or
signals non-orthogonally transmitted on the target transmission resource comprise a reference signal and a data signal.

18. The method according to claim 17, wherein if the non-orthogonally transmitted signals comprise the first signal and a data signal, the first reception mode is used for receiving the first signal and the data signal.

19. A wireless communication method, comprising:

    receiving, by a second device, first information transmitted by a first device; wherein the first information is used for determining a first reception mode matching a first transmission mode;
    the first transmission mode is used for non-orthogonal transmission of a first signal on a target transmission resource, and the first reception mode is used for receiving the first signal on the target transmission resource.

20. The method according to claim 19, wherein the first information comprises the first signal, and the first transmission mode is associated with one or more of:

    a sequence of the first signal,
    transmit power of the first signal,
    a transmission scenario of the first signal,
    a transmission condition of the first signal,
    a transmission resource for transmitting the first signal, or
    a training result of a first model, wherein the first model is used for processing the first signal to be transmitted.

21. The method according to claim 20, wherein if the first transmission mode is associated with the transmission resource for transmitting the first signal, the transmission resource for transmitting the first signal is determined based on a pattern of the first signal.

22. The method according to claim 20 or 21, wherein if the first transmission mode is associated with the transmission scenario of the first signal, the transmission scenario of the first signal is associated with one or more of:

    a cell in which the first signal is transmitted,
    an environment in which the first signal is transmitted, or
    a motion state of the first device and/or the second device.

23. The method according to any one of claims 20 to 22, wherein if the first transmission mode is associated with the transmission condition of the first signal, the transmission condition of the first signal is associated with one or more of:

    a transmission configuration of the first signal,
    an antenna configuration of the first signal, or
    associated with channel characteristics of a channel used for transmitting the first signal.

24. The method according to any one of claims 19 to 23, wherein the first information comprises indication information indicating the first transmission mode.

25. The method according to claim 24, wherein the first reception mode is determined based on one or more of the following second information: the indication information indicating the first transmission mode, configuration information of the first signal, or a transmission scenario of the first signal.

26. The method according to claim 25, wherein the first reception mode is determined based on an association relationship between a reception mode and the second information; and the association relationship is determined based on one or more of the following ways: predefining, determining by the second device, or preconfiguring by a network device.

27. The method according to claim 24, further comprising:
receiving, by the second device, third information transmitted by the first device; wherein the third information is used to indicate the first reception mode.

28. The method according to any one of claims 19 to 27, wherein the first information comprises fourth information, and the fourth information is used for determining a second model applied to the first reception mode.

29. The method according to claim 28, wherein the fourth information comprises one or more of:

the second model,
information used to indicate the second model,
information used to indicate a weight of the second model, or
information used to indicate a function of the second model.

30. The method according to claim 28 or 29, further comprising:

transmitting, by the second device, fifth information to the first device; wherein the fifth information comprises indication information indicating the first transmission mode;
wherein receiving, by the second device, the first information transmitted by the first device comprises:
in response to transmitting the fifth information, receiving, by the second device, the first information transmitted by the first device.

31. The method according to claim 28 or 29, further comprising:
transmitting, by the second device, sixth information to the first device; wherein the sixth information is used to indicate a candidate transmission mode suggested by the second device for multiple types of transmission signals, and the candidate transmission mode is used to indicate that the first signal is to be transmitted non-orthogonally on the target transmission resource.

32. The method according to any one of claims 19 to 31, wherein the first information is carried in one or more of the following information: a broadcast message, an RRC message, a MAC CE, DCI, signaling in random access, a PDCCH, a PDSCH, or a dedicated channel for the first information.

33. The method according to any one of claims 19 to 31, wherein the first information is carried in one or more of the following information: an RRC message, UCI, signaling in random access, a PUCCH, a PUSCH, terminal capability information, or a dedicated channel for the first information.

34. The method according to any one of claims 19 to 31, wherein if the first device is a network device, the second device is a terminal device; or
if the first device is a terminal device, the second device is a network device.

35. The method according to any one of claims 19 to 34, wherein the first signal is a reference signal; and/or
signals non-orthogonally transmitted on the target transmission resource comprise a reference signal and a data signal.

36. The method according to claim 35, wherein if the non-orthogonally transmitted signals comprise the first signal and a data signal, the first reception mode is used for receiving the first signal and the data signal.

37. A communication device, wherein the communication device is a first device, and the communication device comprises:

a transmitting unit, configured to transmit first information to a second device; wherein the first information is used for determining a first reception mode matching a first transmission mode;

wherein the first transmission mode is used for non-orthogonal transmission of a first signal on a target transmission resource, and the first reception mode is used for receiving the first signal on the target transmission resource.

38. The communication device according to claim 37, wherein the first transmission mode is associated with one or more of:

a sequence of the first signal,
transmit power of the first signal,
a transmission scenario of the first signal,
a transmission condition of the first signal,
a transmission resource for transmitting the first signal, or
a training result of a first model, wherein the first model is used for processing the first signal to be transmitted.

39. The communication device according to claim 38, wherein if the first transmission mode is associated with the transmission resource for transmitting the first signal, the transmission resource for transmitting the first signal is determined based on a pattern of the first signal.

40. The communication device according to claim 38 or 39, wherein if the first transmission mode is associated with the transmission scenario of the first signal, the transmission scenario of the first signal is associated with one or more of:

a cell in which the first signal is transmitted,
an environment in which the first signal is transmitted, or
a motion state of the first device and/or the second device.

41. The communication device according to any one of claims 38 to 40, wherein if the first transmission mode is associated with the transmission condition of the first signal, the transmission condition of the first signal is associated with one or more of:

a transmission configuration of the first signal,
an antenna configuration of the first signal, or
associated with channel characteristics of a channel used for transmitting the first signal.

42. The communication device according to any one of claims 37 to 41, wherein the first information comprises indication information indicating the first transmission mode.

43. The communication device according to claim 42, wherein the first reception mode is determined based on one or more of the following second information: the indication information indicating the first transmission mode, configuration information of the first signal, or a transmission scenario of the first signal.

44. The communication device according to claim 43, wherein the first reception mode is determined based on an association relationship between a reception mode and the second information; and the association relationship is determined based on one or more of the following ways: predefining, determining by the second device, or preconfiguring by a network device.

45. The communication device according to claim 42, wherein the transmitting unit is further configured to:
transmit third information to the second device, the third information is used to indicate the first reception mode.

46. The communication device according to any one of claims 37 to 45, wherein the first information comprises fourth information, and the fourth information is used for determining a second model applied to the first reception mode.

47. The communication device according to claim 46, wherein the fourth information comprises one or more of:

the second model,
information used to indicate the second model,
information used to indicate a weight of the second model, or
information used to indicate a function of the second model.

48. The communication device according to claim 46 or 47, wherein the communication device further comprises:

a receiving unit, configured to receive fifth information transmitted by the second device; wherein the fifth information comprises indication information indicating the first transmission mode;
wherein transmitting, by the first device, the first information to the second device comprises:
in response to receiving the fifth information, transmitting, by the first device, the first information to the second device.

49. The communication device according to claim 46 or 47, wherein the receiving unit is further configured to:

receive sixth information transmitted by the second device, wherein the sixth information is used to indicate a candidate transmission mode suggested by the second device for multiple types of transmission signals, and the candidate transmission mode is used to indicate that the first signal is to be transmitted non-orthogonally on the target transmission resource; and
determining, by the first device, the first transmission mode based on the sixth information;
wherein transmitting, by the first device, the first information to the second device comprises:
in response to receiving the sixth information, transmitting, by the first device, the first information to the second device.

50. The communication device according to any one of claims 37 to 49, wherein the first information is carried in one or more of the following information: a broadcast message, an RRC message, a MAC CE, DCI, signaling in random access, a PDCCH; a PDSCH, or a dedicated channel for the first information.

51. The communication device according to any one of claims 37 to 49, wherein the first information is carried in one or more of the following information: an RRC message, UCI, signaling in random access, a PUCCH, a PUSCH, terminal capability information, or a dedicated channel for the first information.

52. The communication device according to any one of claims 37 to 49, wherein if the first device is a network device, the second device is a terminal device; or
if the first device is a terminal device, the second device is a network device.

53. The communication device according to any one of claims 37 to 52, wherein the first signal is a reference signal; and/or signals non-orthogonally transmitted on the target transmission resource comprise a reference signal and a data signal.

54. The communication device according to claim 53, wherein if the non-orthogonally transmitted signals comprise the first signal and a data signal, the first reception mode is used for receiving the first signal and the data signal.

55. A communication device, wherein the communication device is a second device, and the communication device comprises:

a receiving unit, configured to receive first information transmitted by a first device, wherein the first information being used for determining a first reception mode matching a first transmission mode;
wherein the first transmission mode is used for non-orthogonal transmission of a first signal on a target transmission resource, and the first reception mode is used for receiving the first signal on the target transmission resource.

56. The communication device according to claim 55, wherein the first transmission mode is associated with one or more of:

a sequence of the first signal,
transmit power of the first signal,
a transmission scenario of the first signal,
a transmission condition of the first signal,
a transmission resource for transmitting the first signal, or
a training result of a first model, wherein the first model is used for processing the first signal to be transmitted.

57. The communication device according to claim 56, wherein if the first transmission mode is associated with the transmission resource for transmitting the first signal, the transmission resource for transmitting the first signal is determined based on a pattern of the first signal.

58. The communication device according to claim 56 or 57, wherein if the first transmission mode is associated with the transmission scenario of the first signal, the transmission scenario of the first signal is associated with one or more of:

a cell in which the first signal is transmitted,
an environment in which the first signal is transmitted, or
a motion state of the first device and/or the second device.

59. The communication device according to any one of claims 56 to 58, wherein if the first transmission mode is associated with the transmission condition of the first signal, the transmission condition of the first signal is associated with a transmission configuration of the first signal and/or channel characteristics of a channel used for transmitting the first signal.

60. The communication device according to any one of claims 55 to 59, wherein the first information comprises indication information indicating the first transmission mode.

61. The communication device according to claim 60, wherein the first reception mode is determined based on one or more of the following second information: indication information indicating the first transmission mode, configuration information of the first signal, or a transmission scenario of the first signal.

62. The communication device according to claim 61, wherein the first reception mode is determined based on an association relationship between a reception mode and the second information; and the association relationship is determined based on one or more of the following ways: predefining, determining by the second device, or preconfiguring by a network device.

63. The communication device according to claim 60, wherein the receiving unit is further configured to:
receive third information transmitted by the first device, wherein the third information is used to indicate the first reception mode.

64. The communication device according to any one of claims 55 to 63, wherein the first information comprises fourth information, and the fourth information is used for determining a second model for receiving the first signal.

65. The communication device according to claim 64, wherein the fourth information comprises one or more of:

the second model,
information used to indicate the second model,
information used to indicate a weight of the second model, or
information used to indicate a function of the second model.

66. The communication device according to claim 64 or 65, further comprising:

a transmitting unit, configured to transmit fifth information to the first device, wherein the fifth information comprises indication information indicating the first transmission mode;
wherein receiving, by the second device, the first information transmitted by the first device comprises:
in response to transmitting the fifth information, receiving, by the second device, the first information transmitted by the first device.

67. The communication device according to claim 64 or 65, wherein the transmitting unit is further configured to:
transmit sixth information to the first device, wherein the sixth information is used to indicate a candidate transmission mode suggested by the second device for multiple types of transmission signals, and the candidate transmission mode is used to indicate that the first signal is to be transmitted non-orthogonally on the target transmission resource.

68. The communication device according to any one of claims 55 to 67, wherein the first information is carried in one or more of the following information: a broadcast message, an RRC message, a MAC CE, DCI; signaling in random access, a PDCCH, a PDSCH, or a dedicated channel for the first information.

69. The communication device according to any one of claims 55 to 67, wherein the first information is carried in one or more of following information: an RRC message, UCI; signaling in random access, a PUCCH, a PUSCH, terminal capability information, or a dedicated channel for the first information.

70. The communication device according to any one of claims 55 to 67, wherein if the first device is a network device, the second device is a terminal device; or
if the first device is a terminal device, the second device is a network device.

71. The communication device according to any one of claims 55 to 70, wherein the first signal is a reference signal; and/or signals non-orthogonally transmitted on the target transmission resource comprise a reference signal and a data signal.

72. The communication device according to claim 71, wherein if the non-orthogonally transmitted signals comprise the first signal and a data signal, the first reception mode is used for receiving the first signal and the data signal.

73. A communication device, comprising: a transceiver, a memory and a processor, wherein the memory is configured to store a program, and the processor is configured to invoke the program in the memory and control the transceiver to receive or transmit a signal, to cause the communication device to perform the method according to any one of claims 1 to 36.

74. An apparatus, comprising a processor configured to invoke a program from a memory to cause the apparatus to perform the method according to any one of claims 1 to 36.

75. A chip, comprising a processor configured to invoke a program from a memory to cause a device equipped with the chip to perform the method according to any one of claims 1 to 36.

76. A computer-readable storage medium, having a program stored thereon, wherein the program causes a computer to perform the method according to any one of claims 1 to 36.

77. A computer program product, comprising a program, wherein the program causes a computer to perform the method according to any one of claims 1 to 36.

78. A computer program, wherein the computer program causes a computer to perform the method according to any one of claims 1 to 36.

S111      S112      S113

Information to be transmitted → Channel encoding procedure → Modulation procedure → Pilot insertion procedure → Signal transmission    S114

Channel ← Noise

Received signal

Restored information ← Channel decoding procedure ← Demodulation procedure ← Symbol detection procedure ← Channel estimation procedure ← Received signal

S118     S117     S116     S115

FIG. 1

FIG. 2

☐ Resources for transmitting data signal

◩ Resources for transmitting pilot signal

Frequency domain

Time domain

FIG. 3(a)

☐ Resources for transmitting data signal

◩ Resources for transmitting pilot signal

Frequency domain

Time domain

FIG. 3(b)

☐ Resources for transmitting data signal

▨ Resources for transmitting pilot signal

FIG. 3(c)

FIG. 4

Input layer 510    Hidden layer 520    Output layer 530

FIG. 5

| Input layer 610 | Convolutional layer 620 | Pooling layer 630 | Convolutional layer 620 | Pooling layer 630 | Fully connected layer 640 | Output layer 650 |

FIG. 6

→ Vector transmission

○ Processing node

σ Neural network layer

Vector concatenation

Vector duplication

FIG. 7

Receiver 800

Pilot singal → Channel estimation module 810 → Channel information

FIG. 8

FIG. 9

| First device | | Second device |
|---|---|---|

S1010, first information

FIG. 10

| Network device | | Terminal device |
|---|---|---|

S1110, first information, indicating
a first transmission mode

S1120, third information, indicating a
first reception mode

FIG. 11

| Network device | | Terminal device |
|---|---|---|

S1210, first information, indicating a
first transmission mode

S1220,  third information, indicating a
first reception mode

FIG. 12

| Network device | | Terminal device |
|---|---|---|

S1310, information used to indicate
a first transmission mode

S1320, fourth information, the fourth
information includes the second model

FIG. 13

Network device          Terminal device

S1410, information used to indiate
a first transmission mode

S1420, fourth information, the fourth information
is used to indicate a second model

FIG. 14

Network device          Terminal device

S1510, first information, indicating a
first transmission mode

S1520

Based on the first
transmission mode,
determining a first
reception mode

FIG. 15

Terminal device          Network device

S1610, first information, indicating a
first transmission mode

Based on the first
transmission mode,
determining a first
reception mode

S1620

FIG. 16

Terminal device          Network device

S1710, first information, indicating a
first transmission mode

S1720

Based on the first
transmission mode,
determining a first
reception mode

FIG. 17

36

Network device                  Terminal device

S1810, first information, indicating a
first transmission mode

Based on the first
transmission mode,
determining a first
reception mode      S1820

FIG. 18

Terminal device                  Network device

S1910, fifth information, indicating
a first transmission mode

S1920, fourth information, the fourth
information includes a second model

FIG. 19

Terminal device                  Network device

S2010, fifth information, indicating
a first transmission mode

S2020, fourth information, used to
indicate the second model

FIG. 20

Network device                  Terminal device

S2110, sixth information, indicating a
candidate transmission mode

Based on the candidate transmission
mode, determining a first
transmission mode      S2120

Based on the first transmission
mode, determining a first reception
mode      S2130

S2140, fourth information, the fourth
information includes a second model

FIG. 21

| Network device | | Terminal device |
|---|---|---|

S2210, sixth information, indicating a
candidate transmission mode

Based on the candidate transmission
mode, determining a first
transmission mode    ⌐ S2220

Based on the first transmission
mode, determining a first reception
mode    ⌐ S2230

S2240, fourth information, used to
indicate a second model

FIG. 22

Communication device 2300

Transmitting unit 2310

FIG. 23

Communication device 2400

Receiving unit 2410

FIG. 24

Apparatus 2500

Processor
2510

Memory
2520

Transceiver
2530

FIG. 25

## INTERNATIONAL SEARCH REPORT

| | International application No. |
|---|---|
| | **PCT/CN2023/109983** |

**A. CLASSIFICATION OF SUBJECT MATTER**

H04W28/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, ENTXT, CNABS, WPABS, WPABSC, 3GPP, CNKI: 非正交, 非正交叠加, 非正交复用, 非正交传输, 非正交多址, 接收, 解码, 解调, 方案, 方法, 方式, 模型, 人工智能, NOMA, Non-orthogonal, receiv+, decod+, demodulat+, model, AI

**C. DOCUMENTS CONSIDERED TO BE RELEVANT**

| Category* | Citation of document, with indication, where appropriate, of the relevant passages | Relevant to claim No. |
|---|---|---|
| X | US 2021007095 A1 (FRAUNHOFER-GESELLSCHAFT ZUR FORDERUNG DER ANGEWANDTEN FORSCHUNG E.V. et al.) 07 January 2021 (2021-01-07) description, paragraphs [0036]-[0222] | 1-78 |
| X | US 2018376409 A1 (FUJITSU LTD.) 27 December 2018 (2018-12-27) description, paragraphs [0110]-[0195] | 1-78 |
| X | WO 2023040839 A1 (CHINA MOBILE COMMUNICATION LTD., RESEARCH INSTITUTE et al.) 23 March 2023 (2023-03-23) description, page 4 line 9-page 34 line 14 | 1-78 |
| A | US 2018206250 A1 (LG ELECTRONICS INC.) 19 July 2018 (2018-07-19) entire document | 1-78 |
| A | LG ELECTRONICS. "Considerations on the receiver types and NOMA schemes" *3GPP TSG RAN WG1 Meeting #92, R1-1802230*, 02 March 2018 (2018-03-02), entire document | 1-78 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 April 2024** | **17 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109983**

| Patent document cited in search report | | | Publication date (day/month/year) | Patent family member(s) | | | Publication date (day/month/year) |
|---|---|---|---|---|---|---|---|
| US | 2021007095 | A1 | 07 January 2021 | WO | 2019158524 | A1 | 22 August 2019 |
| | | | | EP | 3753214 | A1 | 23 December 2020 |
| | | | | US | 2023262666 | A1 | 17 August 2023 |
| | | | | KR | 20200125631 | A | 04 November 2020 |
| | | | | EP | 4287720 | A2 | 06 December 2023 |
| | | | | KR | 20240024365 | A | 23 February 2024 |
| US | 2018376409 | A1 | 27 December 2018 | WO | 2017154159 | A1 | 14 September 2017 |
| | | | | JPWO | 2017154159 | A1 | 17 January 2019 |
| WO | 2023040839 | A1 | 23 March 2023 | CN | 115942503 | A | 07 April 2023 |
| US | 2018206250 | A1 | 19 July 2018 | WO | 2017018620 | A1 | 02 February 2017 |

Form PCT/ISA/210 (patent family annex) (July 2022)